(19) Europäisches Patentamt / European Patent Office / Office européen des brevets

(11) **EP 2 809 974 B1**

(12) **EUROPÄISCHE PATENTSCHRIFT**

(45) Veröffentlichungstag und Bekanntmachung des Hinweises auf die Patenterteilung:
**30.12.2015   Patentblatt 2015/53**

(21) Anmeldenummer: **12724075.2**

(22) Anmeldetag: **25.04.2012**

(51) Int Cl.:
***F16K 1/44*** *(2006.01)*

(86) Internationale Anmeldenummer:
**PCT/EP2012/001755**

(87) Internationale Veröffentlichungsnummer:
**WO 2013/113341 (08.08.2013 Gazette 2013/32)**

(54) **VERFAHREN ZUR SITZREINIGUNG EINES DOPPELSITZVENTILS UND DOPPELSITZVENTIL ZUR DURCHFÜHRUNG DES VERFAHRENS**

METHOD FOR CLEANING THE SEAT OF A DOUBLE SEAT VALVE AND DOUBLE SEAT VALVE FOR PERFORMING THE METHOD

PROCÉDÉ PERMETTANT DE NETTOYER LES SIÈGES D'UNE SOUPAPE À DOUBLE SIÈGE, ET SOUPAPE À DOUBLE SIÈGE PERMETTANT DE METTRE EN ŒUVRE LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2012   DE 102012002151**

(43) Veröffentlichungstag der Anmeldung:
**10.12.2014   Patentblatt 2014/50**

(73) Patentinhaber: **GEA Tuchenhagen GmbH**
**21514 Büchen (DE)**

(72) Erfinder:
• **BURMESTER, Jens**
**23883 Grambek (DE)**

• **SÜDEL, Matthias**
**23626 Ratekau (DE)**
• **SCHULZ, Arne**
**22767 Hamburg (DE)**
• **TOLLE, Bastian**
**21514 Büchen (DE)**

(74) Vertreter: **Hauck Patentanwaltspartnerschaft mbB**
**Kaiser-Wilhelm-Straße 79-87**
**20355 Hamburg (DE)**

(56) Entgegenhaltungen:
WO-A1-2007/054134     WO-A1-2011/038738
DE-A1-102007 027 765     DE-A1-102007 038 124

**Beschreibung**

TECHNISCHES GEBIET

Die Erfindung betrifft ein Verfahren zur Sitzreinigung eines Doppelsitzventils, das zwei seriell angeordnete, relativ zueinander bewegbare Schließglieder aufweist, die in der Schließstellung des Doppelsitzventils das Überströmen von Fluiden von einem Ventilgehäuseteil eines Ventilgehäuses in ein anderes verhindern, die sowohl in der Schließ- als auch in der Offenstellung einen Leckagehohlraum zwischen sich begrenzen, der mit der Umgebung des Doppelsitzventils über eine Ablaufbohrung, die von einem an dem ersten Schließglied ausgebildeten, aus dem Ventilgehäuse herausgeführten Rohrschaft berandet ist, verbunden ist, sowie mit weiteren Merkmalen nach dem Oberbegriff des Anspruchs 1. Die Erfindung betrifft weiterhin ein Doppelsitzventil zur Durchführung des Verfahrens mit den Merkmalen des Oberbegriffs des Anspruchs 9.

STAND DER TECHNIK

Ein sitzreinigungsfähiges Doppelsitzventil der einleitend gekennzeichneten Gattung zur Durchführung des Verfahrens ist aus der WO 2007/054 134 A1 oder der nachangemeldeten US 2009/0044874 A1 bekannt. Bei diesem Doppelsitzventil besitzt das abhängig angetriebene, bezogen auf eine senkrechte Normallage, obere Schließglied, im Folgenden als zweites Schließglied bezeichnet, an einem dem unabhängig angetriebenen, unteren Schließglied, im Folgenden als erstes Schließglied bezeichnet, zugewandten zweiten Endabschnitt eine Ausnehmung mit einer zylindrischen Umfangswand, die mit einer zylindrischen ersten Sitzfläche fluchtet, wobei die Ausnehmung so dimensioniert ist, um während der Öffnungsbewegung einen ersten Endabschnitt und eine radiale erste Dichtung des ersten Schließgliedes dichtend aufzunehmen, bevor das zweite Schließglied öffnet. Dabei sind das erste Schließglied als Schieberkolben mit einer radialen ersten Dichtung und das zweite Schließglied entweder als Schieberkolben mit einer radial wirkenden oder kegelförmig mit einer axial/radial wirkenden zweiten Dichtung ausgebildet.
Das bekannte Doppelsitzventil limitiert unter Anderem die Reinigungsmittelmenge bei der jeweiligen Sitzreinigung. Sein Leckageauslass, der auch diese Reinigungsmittelmengen in die Umgebung des Doppelsitzventils abführen muss, ist im Regelfall so bemessen, dass er die Forderungen bzw. Bestimmungen der **United States Food and Drug Administration** der USA (USFDA) in den **"3-A Sanitary Standards for Double-Seat Mixproof Valves, Number 85-02 [1],"** erfüllt, die unter Anderem verlangen, dass der minimalste Durchtrittsquerschnitt des Leckageauslasses so zu bemessen ist, dass er mindestens dem Durchtrittsquerschnitt der größten an das Doppelsitzventil anschließbaren Rohrleitung entspricht (Forderung D14.2). Weiterhin werden im Zusammenhang mit der Sitzreinigung weitere Forderungen nach [1] erfüllt, die besagen, dass der jeweils geschlossene Sitzbereich von der jeweils generierten Sitzreinigungsströmung nicht direkt angeströmt oder druckerhöhend beaufschlagt wird (D14.5.2.1) und dass der Druck im dem Leckageraum zugewandten geschlossenen Sitzbereich gleich oder kleiner dem Atmosphärendruck sein muss (D14.5.2.2).
Damit erfüllt das bekannte Doppelsitzventil auch weitere implizite Forderungen des vorg. Standards nach [1], und zwar jene, dass bei größeren Dichtungsdefekten oder gar dem Verlust einer der beiden Sitzdichtungen im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen wird von dem bekannten Doppelsitzventil nicht nur die Forderung nach einer Begrenzung der Reinigungsmittelmenge und Vermeidung einer Direktbeaufschlagung der Sitzbereiche im Zuge der Sitzreinigung erfüllt; sondern auch die Forderung nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.
Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, sodass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren, falls sie wirksam werden, eine Leckageströmung über den jeweiligen Drosselspalt und die defekte oder die gänzlich nicht mehr vorhandene Sitzdichtung.
Während das vorgenannte Doppelsitzventil nach der WO 2007/054 134 A1 oder der nachangemeldeten US 2009/0044874 A1 die Forderungen des Standards nach [1] allein mit strömungsmechanischen Mitteln und Wirkmechanismen an den den Leckagehohlraum begrenzenden Bauteilen des Doppelsitzventils löst, schlägt die DE 10 2007 038 124 A1 oder die nachangemeldete US 2009/0065077 A1 vor, die besagten Forderungen des Standards nach [1] durch ein zwischen beiden Schließgliedern des Doppelsitzventils angeordnetes, zu beiden relativ bewegliches und separates drittes Glied, ein sog. Strömungsbarrierenelement, zu erfüllen. Dieses Strömungsbarrierenelement schattet bei Anlüften des einen Schließglieds und beim Beaufschlagen des Leckagehohlraums mit Reinigungsmedium das zumindest eine Dichtelement und/oder den Schließgliedsitz des anderen Schließglieds, das sich in seiner Schließstellung befindet, gegenüber einer Direktanströmung durch das in den Leckagehohlraum eintretende Reinigungsmedium ab. Unter "Abschatten" ist ausweislich der Beschreibung der vorg. Dokumente zu verstehen, dass das Dichtelement des jeweiligen sich in Schließstellung befindlichen Schließglieds nicht direkt und somit mit hoher Strömungsgeschwindigkeit von dem Reinigungsmedium beaufschlagt wird, wobei es zugelassen ist, dass das Reinigungsmedium im Wesentlichen drucklos und mit geringer Strömungsgeschwindigkeit in den Bereich des Schließgliedsitzes oder des Dichtelements des sich in Schließstellung befindlichen Schließglieds gelangt, so dass sich dort kein Staudruck aufbauen kann. Das Strömungsbarrierenelement muss ausweislich der Beschreibung nicht vollkommen dichtend gehäuseseitig anliegen; vielmehr ist es bevorzugt vom Gehäuse um einen kleinen Spalt beabstandet. Weiterhin entnimmt man den Figuren 1, 4 bis 7 und 12 bis 15 der WO 2007/054 134 A1 oder der US 2009/0044874 A1, dass der Leckageauslass die Forderung des Standards nach [1] gemäß D14.2 erfüllt, nämlich dass der minimalste Durchtrittsquerschnitt des Leckageauslasses mindestens dem Durchtrittsquerschnitt der größten an das Doppelsitzventil anschließbaren Rohrleitung entspricht.

In der WO 98/41786 A1 (Seite 11, Zeile 24 bis Seite 12, Zeile 9) oder der nachangemeldeten US 6, 178,986 B1 (Spalte 6, Zeile 58 bis Spalte 7, Zeile 11) ist bereits ein eigenständiges, gegenüber den beiden Schließgliedern eines sitzreinigungsfähigen Doppelsitzventils relativ bewegliches, in der zylindrischen Sitzfläche für das erste Schließglied gedichtet geführtes drittes Glied beschrieben, aber nicht beansprucht. Diese bekannte Ausführungsform unterscheidet sich von dem Gegenstand der nachveröffentlichten DE 10 2007 038 124 A1 oder der US 2009/0065077 A1 demnach im Wesentlichen durch die Wechselwirkung zwischen dem dritten Glied, dem Strömungsbarrierenelement, und der zugeordneten zylindrischen Sitzfläche für das erste Schließglied. Während die ältere Lösung hier eine Abdichtung mittels einer radial wirkenden Dichtung im Gleiteingriff vorsieht, muss bei der jüngeren Lösung das dritte Glied nicht vollkommen dichtend gehäuseseitig anliegen, sondern es ist bevorzugt vom Gehäuse um einen kleinen radialen Spalt beabstandet.

Das Strömungsbarrierenelement nach der DE 10 2007 038 124 A1 oder der nachangemeldeten US 2009/0065077 A1 erfüllt durch seine "abschattende" Wirkung in seiner gehäuseseitig gedichteten oder möglicherweise auch nicht gedichteten Ausführungsform die vorstehend genannte Forderung D14.5.2.1 und, bei entsprechender Dimensionierung des Leckageauslasses, auch die Forderung D14.2 nach [1]. Nicht erfüllt wird offensichtlich die Forderung D14.5.2.2, denn das Strömungsbarrierenelement tritt nunmehr innerhalb des in Rede stehenden sitzreinigungsfähigen Doppelsitzventils in einer signifikant modifizierten Ausführungsform in Erscheinung, wie dies die Firmendruckschrift **Pentair Südmo Operating Instructions, BAA D 365it Complete PMO, Version 1.01, Double-seat valve type D 365it Complete PMO type D620 [2],** veröffentlicht November 2011 (201111) unter der Internet-Adresse http://www.suedmo.de/resources/images/790. zeigt.

In der gegenüber der Firmendruckschrift [2] nachveröffentlichten DE 10 2010 046 137 A1 wird die erweiterte Funktion des bekannten, als Ringkörper ausgebildeten Strömungsbarrierenelements beschrieben. Der Ringkörper unterteilt in der Anlüftstellung zumindest eines der Schließglieder zusammen mit diesem den Leckageraum in einen ersten Leckageraumabschnitt und einen zweiten Leckageraumabschnitt. Der Ringkörper ist so ausgebildet, dass insbesondere in der jeweiligen Sitzreinigungsstellung generiertes Reinigungsmedium durch den Ringkörper hindurch vom ersten Leckageraumabschnitt in den zweiten Leckageraumabschnitt übertreten kann. Dieser Übertritt erfolgt derart, dass der Druck im zweiten Lageraumabschnitt gegenüber dem Druck im ersten Leckageraumabschnitt reduziert ist und das Reinigungsmedium von dem zweiten Leckageraumabschnitt zum Leckageauslauf gelangt. Der Ringkörper übernimmt somit neben der Funktion der Abschattung der Dichtung bzw. des Schließgliedsitzes des sich in seine Schließstellung befindlichen Schließgliedes zusätzlich auch die Funktion der Drosselung der jeweiligen Sitzreinigungsströmung. Diese Drosselung ist aber nur möglich und hinreichend, wenn der Ringkörper stets gehäuseseitig hinreichend gedichtet ist und jeweils am angelüfteten Schließglied in der notwendigen Weise dichtend anliegt.

Durch diese Ausgestaltung ist es möglich, wie dies beispielsweise die Seiten 14 und 25 der Firmendruckschrift [2] und Figur **1** der DE 10 2010 046 137 A1 mit Blick auf das erste Schließglied und den mit diesem verbundenen Rohrschaft verdeutlichen, den im Rohrschaft ausgebildeten Leckageauslass signifikant gegenüber dem Gegenstand der DE 10 2007 038 124 A1 oder der US 2009/0065077 A1 und damit abweichend von der Bestimmung D14.2 des Standards nach [1] zu reduzieren. Diese abweichende Auslegung des Doppelsitzventils wird möglich durch die Ausnahmebestimmung D14.2.1.1 des Standards nach [1], die besagt, dass ein gegenüber D14.2 reduzierter Leckageauslass dann zulässig ist, wenn mit dem abweichend ausgelegten Doppelsitzventil Daten zur Verfügung gestellt werden, die beweisen, dass der maximale Druck zwischen den Ventilsitzen des Doppelsitzventils kleiner oder gleich dem maximalen Druck in einer mit einem unreduzierten Leckageauslass versehenen Verbindungsleitung zwischen einem Absperrventil und einem Wechselventil einer Vergleichsanordnung ist, die in den Standards nach [1] mit "Block and Bleed" Anordnung bezeichnet ist.

Das Doppelsitzventil gemäß der Firmendruckschrift [2] oder der DE 10 2010 046 137 A1 hat den bemerkenswerten Vorteil, dass das Ventilgehäuse um ein bis zwei Nennweiten kleiner gegenüber der Ausführung mit einem nicht im Querschnitt reduzierten Leckageauslass und damit deutlich kostengünstiger ausgeführt werden kann, weil in der Offenstellung des Doppelsitzventil, in der der Rohrschaft die Verbindungsöffnung zwischen den Ventilgehäuseteilen durchsetzt, der Durchtrittsquerschnitt des Ringspaltes zwischen Rohrschaft und Verbindungsöffnung, der dem Durchtrittsquerschnitt der größten an das Ventilgehäuse anschließbaren Rohrleitung entsprechen muss, ohne die vorstehende Nennweitenvergrößerung realisiert werden kann.

Das Doppelsitzventil gemäß der Firmendruckschrift [2] oder der DE 10 2010 046 137 A1 hat allerdings den großen Nachteil, dass zum Einen das dritte Glied in Form eines gehäuseseitig gedichteten Strömungsbarrierenelements in Verbindung mit den weiteren Merkmalen seiner Anordnung im Leckagehohlraum und Einbindung in die Schließgliedkonfiguration einen komplizierten und damit störanfälligen konstruktiven Aufbau des Doppelsitzventils bedingt. Zum Anderen ist dieses zusätzliche Einbauteil im Leckagehohlraum mit zusätzlich notwendigen Dichtungsmitteln, Ecken und Toträumen grundsätzlich schwer im Durchfluss zu reinigen und damit unter hygienischen Gesichtspunkten im bestimmungsgemäßen Anwendungsbereich bedenklich. Eine hinreichende Drosselung der jeweiligen Sitzreinigungsströmung ist darüber hinaus nur dann sichergestellt, wenn diese Sitzreinigungsströmung die planmäßig vorgesehenen Drosselstellen im Strömungsbarrierenelement passiert und nicht im Bypass in der formschlüssigen Verbindung zwischen letzterem und dem in seiner Sitzreinigungsstellung befindlichen Schließglied mehr oder weniger ungedrosselt vorbeigeführt wird.

Die Fachwelt sucht daher nach einer Lösung, wie ohne zusätzliche Einbauteile im Leckagehohlraum eines sitzreinigungsfähigen Doppelsitzventils, und zwar mit rein strömungsmechanischen Mitteln und Wirkmechanismen an den den Leckagehohlraum begrenzenden, bislang vorhandenen Bauteilen, die Ausnahmebestimmung D14.2.1.1 und die Bestimmung D14.5.2.2 des Standards nach [1] zu realisieren ist.

Es ist Aufgabe der vorliegenden Erfindung, ein Verfahren zur Sitzreinigung eines Doppelsitzventil vorzuschlagen und ein Doppelsitzventil der gattungsgemäßen Art zur Durchführung des Verfahrens derart weiterzuentwickeln, die auch unter der Bedingung, dass die Querschnittsfläche der Ablaufbohrung kleiner als die der größten an das Doppelsitzventil anschließbaren Rohrleitung ist, eine möglichst verwirbelungsfreie Ableitung der Sitzreinigungsströmung in den und aus dem Leckagehohlraum sicherstellen und eine druckerhöhende Direktbeaufschlagung der Sitzbereiche sicher vermeiden.

ZUSAMMENFASSUNG DER ERFINDUNG

Die Aufgabe wird durch ein Verfahren zur Sitzreinigung eines Doppelsitzventils mit den Merkmalen des Anspruchs 1 gelöst. Vorteilhafte Ausgestaltungen des Verfahrens sind Gegenstand der Unteransprüche 2 bis 8. Ein Doppelsitzventil zur Durchführung des Verfahrens ist Gegenstand des abhängigen Anspruch 9. Vorteilhafte Ausgestaltungen des sitzreinigungsfähigen Doppelsitzventils sind in den Unteransprüchen beschrieben.

Das erfindungsgemäße Verfahren für ein sitzreinigungsfähiges Doppelsitzventil basiert entweder auf der grundsätzlichen Schließgliedkonfiguration, wie sie das bekannte Doppelsitzventil gemäß WO 2007/054134 A1 aufweist, oder es ist auch auf die grundsätzliche Schließgliedkonfiguration anwendbar, wie sie aus der WO 2007/054131 A1 bekannt ist. Bei beiden Doppelsitzventilen ist am jeweiligen Schließglied leckageraumseitig ein zylindrischer Ansatz zur Bildung des jeweiligen Drosselspaltes angeordnet. Darüber hinaus verwendet die vorliegende Erfindung den halben Durchmesserunterschied dieser zylindrischen Ansätze, der die Ausbildung einer Übergangsfläche zwischen den durchmesserunterschiedlichen Abschnitten einer die Ventilgehäuseteile eines Ventilgehäuses miteinander verbindenden Verbindungsöffnung erlaubt, wobei die Abschnitte den zylindrischen Ansätzen zugeordnet sind. Weiterhin sind die Schließglieder unabhängig voneinander durch einen Teilhub jeweils spaltweit in eine Sitzreinigungsstellung zwecks Spülung ihrer Sitzflächen überführbar. Eine in der jeweiligen Sitzreinigungsstellung generierte Sitzreinigungsströmung erfährt in dem am zugeordneten Schließglied leckageraumseitig angeordneten Drosselspalt die erforderliche Drosselung, bevor sie in einen zwischen den Schließgliedern angeordneten Leckagehohlraum eintritt. Schließlich erfährt bei beiden Doppelsitzventilen die durch das erste Schließglied generierte erste Sitzreinigungsströmung an einer rotationssymmetrischen Umlenkfläche, die in einer Ausnehmung im zweiten Schließglied ausgebildet ist, eine stoßfreie, in eine Ablaufbohrung gerichtete Umlenkung, wobei die Ablaufbohrung von einem an dem ersten Schließglied ausgebildeten, aus dem Ventilgehäuse herausgeführten Rohrschaft berandet ist.

Das Doppelsitzventil zur Durchführung des erfindungsgemäßen Verfahrens wird in der vorliegenden Erfindung ausschließlich von dem Doppelsitzventil gemäß WO 2007/054134 A1 ausgehend weiterentwickelt.

Zur Lösung der der Erfindung zugrunde liegenden Aufgabe besteht bezüglich des Verfahrens der erfinderische Grundgedanke darin, dass die erste Sitzreinigungsströmung durch die Umlenkfläche radial nach innen und axial zum ersten Schließglied hin bis zum Verlassen des zweiten Schließgliedes an einem außerhalb der Ausnehmung befindlichen stirn- und radial innenseitigen Ende des zweiten Schließgliedes zwangsweise geführt ist. Die erste Sitzreinigungsströmung, deren Behandlung im Leckagehohlraum von vornherein schwieriger und problematischer als jene der zweiten Sitzreinigungsströmung ist, wird nunmehr sehr weit radial nach innen und gleichzeitig axial zum ersten Schließglied hin umgelenkt und zwangsweise geführt, und sie mündet nicht mehr aus einer Stirnfläche der Ausnehmung im zweiten Schließglied aus, sondern aus einer außerhalb der Ausnehmung befindlichen Stirnfläche des zweiten Schließglieds selbst aus. Dabei ist es vorteilhaft, wenn die Umlenkung und zwangsweise Führung radial und axial sehr weitreichend erfolgt, und zwar bis zu einem äußersten, das zweite Schließglied begrenzenden Ende. Bei den beiden vorstehend genannten, bekannten Doppelsitzventilen, von denen die Erfindung mit Blick auf das Verfahren ausgeht, wurde die erste Sitzreinigungsströmung nur bis zur Ausmündung der Umlenkfläche aus der Stirnfläche der Ausnehmung im zweiten Schließglied, d.h. auf relativ kurzem Strömungsweg, umgelenkt und zwangsweise geführt.

Die vorgeschlagene erfindungsgemäße verfahrenstechnische Behandlung der ersten Sitzreinigungsströmung hat in Verbindung mit ihrer hinreichenden Drosselung die überraschende Wirkung, dass die der Erfindung zugrundeliegende Aufgabe, insbesondere unter den Bedingungen eines reduzierten Leckageauslasses, in vollem Umfang gelöst wird. Ein Aufstauen der ersten Sitzreinigungsströmung im Leckageauslass, der durch die Abfolge mehrerer Abschnitte einer Ablaufbohrung im Rohrschaft ausgebildet sein kann, findet in keinem dieser Abschnitte statt; vielmehr ist der jeweilige Durchflussquerschnitt der Ablaufbohrung an keiner Stelle vollständig ausgefüllt, sodass der Atmosphärendruck bis in den Leckagehohlraum durchgreifen kann. Eine unzulässige Überdruckbildung gegenüber dem Atmosphärendruck kann daher im Leckagehohlraum nicht stattfinden. Das Gleiche gilt für die zweite Sitzreinigungsströmung, die von vornherein durch ihre im Leckagehohlraum noch wirksamere Ejektorwirkung einfacher als die erste Sitzreinigungsströmung zu handhaben ist.

Das erfindungsgemäße Verfahren kann die anmeldungsgemäße Aufgabenstellung erst recht bei einem Doppelsitzventil der vorbeschriebenen Art lösen, bei dem der Leckageauslass nicht gegenüber dem Durchtrittsquerschnitt der größten an das Doppelsitzventil anschließbaren Rohrleitung reduziert ist.

Eine vorteilhafte Ausgestaltung des vorgeschlagenen Verfahrens sieht vor, dass die zwangsweise Führung der ersten Sitzreinigungsströmung bis in den Eintritt der Ablaufbohrung hinein aufrechterhalten wird. Diese besonders lange und noch weitreichendere Umlenkung und zwangsweise Führung der ersten Sitzreinigungsströmung führt zu einer noch weiter verbesserten Erfüllung der Forderungen des Standards nach [1]. Darüber hinaus erfährt durch diese Behandlung der ersten Sitzreinigungsströmung, im Unterschied zum gattungsbildenden Doppelsitzventil, wie dies weiterhin vorgesehen ist, die zweite Sitzreinigungsströmung erstmals auch eine in die Ablaufbohrung gerichtete Umlenkung. Wird die erste Sitzreinigungsströmung noch weiter in die Ablaufbohrung hinein umgelenkt und zwangsweise geführt, dann erfährt auch die zweite Sitzreinigungsströmung, wie dies ein anderer Vorschlag vorsieht, neben der vorstehenden Umlenkung zusätzlich eine zwangsweise Führung bis in den Eintritt der Ablaufbohrung hinein.

Für den unplanmäßigen Fall, dass es zu einem Aufstauen der Sitzreinigungsströmungen im engsten Durchtrittsquerschnitt der Ablaufbohrung kommen sollte, wird weiterhin vorgeschlagen, dass die Ablaufbohrung im Bereich ihres Eintritts ein Speichervolumen mit einer Füllhöhe ausbildet, deren hydrostatischer Druck ausreicht, um den Volumenstrom an Flüssigkeit der jeweiligen Sitzreinigungsströmung mindestens durch einen minimalen Ablaufquerschnitt der Ablaufbohrung, der sich, in Schwerkraftrichtung gesehen, an die Füllhöhe anschließt, hindurchzufördern.

Damit der vorstehend beschriebene unplanmäßige Fall eines Aufstauens der Sitzreinigungsströmungen im engsten Durchtrittsquerschnitt der Ablaufbohrung nicht eintreten kann, sieht ein weiterer Vorschlag vor, dass die durch die Sitzreinigungsströmungen generierten jeweiligen Volumenströme an Flüssigkeit derart gedrosselt sind, dass die Volumenströme ohne Rückstau in der Ablaufbohrung durch letztere in die Umgebung des Doppelsitzventils ablaufen.

Der Volumenstrom an Flüssigkeit der jeweiligen Sitzreinigungsströmung wird erfindungsgemäß derart gedrosselt und/oder umgelenkt und geführt, dass infolge der Ejektorwirkung der jeweiligen Sitzreinigungsströmung der Druck an dem leckageraumseitigen Abschnitt der Sitzfläche des jeweils in seiner Schließstellung verbleibenden, anderen Schließgliedes gleich oder kleiner dem Umgebungsdruck des Doppelsitzventil, dem Atmosphärendruck, ist. Mit Ausnahme der Gleichheit der in Rede stehenden Drücke bedeutet dies, dass der jeweils geschlossene Ventilsitz besaugt wird, sodass ein Übertritt von Reinigungsflüssigkeit in das Produkt selbst bei grob beschädigter oder gänzlich fehlender Sitzdichtung ausgeschlossen ist.

Es ist von Vorteil, wenn die durch die Sitzreinigungsströmungen generierten jeweiligen Volumenströme an Flüssigkeit derart gedrosselt sind, dass die Volumenströme einander gleich sind. Dabei ist der Volumenstrom der ersten Sitzreinigungsströmung die limitierende Größe für die vorgeschlagene Drosselung, da die erste Sitzreinigungsströmung die problematischste und am schwierigsten zu handhabende ist. Dies resultiert aus dem nicht zu ändernden Sachverhalt, dass die erste Sitzreinigungsströmung den Auflagespalt zwischen dem in seiner Schließlage befindlichen zweiten Schließglied und einer zugeordneten Anschlagfläche am Ventilgehäuse unmittelbar und quer zum Auflagespalt überströmt, sodass sich in diesem Bereich der an sich Unterdruck erzeugenden Ejektorwirkung der ersten Sitzreinigungsströmung ein Überdruck erzeugender Staudruck überlagern kann. Die Unterdruck erzeugende Ejektorwirkung der zweiten Sitzreinigungsströmung ist weitgehend frei von staudruckbildenden Überlagerungen.

Das Doppelsitzventil zur Durchführung des Verfahrens nach der Erfindung zeichnet sich durch folgende, an sich bekannten Merkmale aus:

- das erste Schließglied weist an seinem ersten Endabschnitt eine erste Dichtung auf, die radial gegenüber der in der Verbindungsöffnung ausgebildeten zylindrischen ersten Sitzfläche abdichtet;
- das zweite Schließglied besitzt an seinem dem ersten Schließglied zugewandten zweiten Endabschnitt eine Ausnehmung mit einer zylindrischen Umfangswand, die mit der zylindrischen ersten Sitzfläche fluchtet, wobei die Umfangswand der Ausnehmung so dimensioniert ist, um während der Öffnungsbewegung den ersten Endabschnitt und die radiale erste Dichtung des ersten Schließgliedes dichtend aufzunehmen, bevor das zweite Schließglied öffnet;

•  das zweite Schließglied ist durch einen der Öffnungsbewegung gleichgerichteten zweiten Teilhub und das erste Schließglied ist durch einen der Öffnungsbewegung entgegengerichteten ersten Teilhub in seine jeweilige Sitzreinigungsstellung überführbar;

•  an jedem Endabschnitt ist leckageraumseitig ein zylindrischer Ansatz angeordnet, der mit der zugeordneten Verbindungsöffnung den ringförmigen Drosselspalt bildet;

•  die erste Sitzfläche weist einen Durchmesser auf, der kleiner ist als der Durchmesser einer dem zweiten Schließglied zugeordneten ringförmigen Ausnehmung in der Verbindungsöffnung, und es ist eine Übergangsfläche zwischen der ersten Sitzfläche und der ringförmigen Ausnehmung vorgesehen;

•  das zweite Schließglied liegt in seiner Schließstellung mit einer an einer Stirnfläche seines zylindrischen zweiten Ansatzes angeordneten Anschlagfläche an der Übergangsfläche an, und zwar unmittelbar an die erste Sitzfläche angrenzend;

•  die Umfangswand geht an ihrem dem ersten Schließglied abgewandten Ende in die Umlenkfläche über, deren Kontur, im Meridianschnitt gesehen, einen knickfreien Verlauf aufweist.

Der erfinderische Grundgedanke beim Doppelsitzventil zur Durchführung des Verfahrens besteht darin, dass die Umlenkfläche den restlichen, nicht von der Umfangswand begrenzten Bereich der Ausnehmung in Gänze berandet und an einem dem ersten Schließglied zugewandten stirn- und radial innenseitigen Ende des zweiten Schließgliedes derart aus letzterem ausmündet, dass das stirn- und radial innenseitige Ende des zweiten Schließgliedes, in der Längsachse des Doppelsitzventils gesehen, über den gedachten Raum, der durch die durch die Anschlagfläche hindurchgehende Ebene stirnseitig begrenzt ist, hinausreicht. Die Vorteile der genannten Ausgestaltung wurden vorstehend im Zusammenhang mit dem erfindungsgemäßen Verfahren zur Sitzreinigung eines Doppelsitzventils bereits beschrieben.

Das erfindungsgemäße Doppelsitzventil stellt in einer bevorzugten Ausführungsform sicher, dass die Ventilgehäuseteile entsprechend dem größten Nenndurchtrittsquerschnitt einer an letztere anschließbaren Rohrleitung ausgeführt und über einen die Verbindungsöffnung innenseits ausbildenden Sitzring miteinander verbunden sind. Ein Verbindungsteil des Rohrschaftes, das einen Abschnitt der Ablaufbohrung innenseitig ausbildet, durchdringt beim vollen Öffnungshub des Doppelsitzventils mindestens die Verbindungsöffnung und ist dort radial außenseitig derart bemessen, dass die Verbindungsöffnung an ihrer engsten Stelle einen Ringraum mit einem Ringraum-Durchtrittsquerschnitt ausbildet, der mindestens dem vorg. größten Nenndurchtrittsquerschnitt entspricht. Durch diese Bemessungsvorschrift ist zwingend sichergestellt, dass der Ringraum-Durchtrittsquerschnitt an keiner Stelle eine Verengung gegenüber dem Nenndurchtrittsquerschnitt der anschließbaren Rohrleitung bildet. Da die Ventilgehäuseteile in ihrer Nennweite durch die anzuschließende Rohrleitung determiniert und damit nicht von vornherein um ein bis zwei Nennweiten überdimensioniert sind, ist der Außendurchmesser des Verbindungsteils und damit der radial innenseitige Abschnitt der Ablaufbohrung derart zu bemessen und zu reduzieren, dass der RingraumDurchtrittsquerschnitt in der erforderlichen Größe realisiert ist.

In vorteilhafter Weise ist der Verbindungsteil, der mit seiner querschnittsreduzierenden und damit einen an sich unerwünschten Strömungswiderstand erzeugenden Wirkung auf das gerade notwendige Längenmaß beschränkt bleibt, derart ausgebildet, dass sich die Ablaufbohrung vom leckageraumseitigen Ende des ersten Schließgliedes in einem Einlauftrichter konusförmig und stetig bis zum Verbindungsteil verjüngt und in letzterem auf einer begrenzten Länge einen unveränderten, minimalen Ablaufquerschnitt aufweist.

Zur Verringerung des Strömungswiderstandes der Ablaufbohrung ist diese, entsprechend einem weiteren Vorschlag, im Anschluss an den Verbindungsteil in einem als erster Druckausgleichskolben ausgebildeten Abschnitt des Rohrschaftes erweitert, wobei der Druckausgleichskolben einen dem Durchmesser der zylindrischen ersten Sitzfläche entsprechenden oder von diesem sich geringfügig nach beiden Seiten unterscheidenden Außendurchmesser aufweist.

Zur Vermeidung eines unplanmäßigen Aufstauens der Sitzreinigungsströmungen vor dem engsten Durchtrittsquerschnitt der Ablaufbohrung, dem Verbindungsteil, ist vorgesehen, dass der Einlauftrichter mit einem sich in ihm ggf. aufstauenden Volumen an Flüssigkeit eine Füllhöhe ausbildet, deren hydrostatischer Druck ausreicht, um den in der jeweiligen Sitzreinigungsstellung generierten Volumenstrom an Flüssigkeit mindestens durch den minimalen Ablaufquerschnitt des Verbindungsteils, das sich, in Schwerkraftrichtung gesehen, an die Füllhöhe anschließt, hindurchzufördern.

Unterschiedliche Beanspruchungen der Dichtungen der beiden Schließglieder und unterschiedliche Lagerungs- und Führungsbedingungen letzterer erlauben es, wie dies ein Vorschlag vorsieht, dass eine radiale zweite Spaltweite des zweiten Drosselspaltes kleiner als eine radiale erste Spaltweite des ersten Drosselspaltes ausgeführt ist. Dies wirkt sich insofern auf die größenmäßige Abstimmung der durch die Drosselspalte generierten Volumenströme günstig aus, als am zweiten Drosselspalt konstruktiv eine geringere Spaltlänge zur Verfügung steht als am ersten Drosselspalt, wobei bekanntermaßen die Spaltlänge nur linear und die radiale Spaltweite exponentiell die Drosselung beeinflusst. Es hat sich als vorteilhaft und zielführend erwiesen, wenn sich die relativen radialen Spaltweiten des ersten und des zweiten Drosselspaltes annähernd wie 2 :1 verhalten, wobei unter relativer radialer Spaltweite das Verhältnis zwischen absoluter radialer Spaltweite und dem mittleren Durchmesser, auf dem er angeordnet ist, zu verstehen ist.

Im Hinblick auf gleiche Ablaufbedingungen der Sitzreinigungsströmungen in der Ablaufbohrung ist es von Vorteil, wenn die ringförmigen Drosselspalte mit ihrer radialen Spaltweite und einer zugeordneten Länge so ausgelegt sind, dass die in den jeweiligen Sitzreinigungsstellungen mit den Teilhüben durch die zugeordneten Sitzreinigungsströmungen generierten Volumenströme an Flüssigkeit gleich sind, wobei der Volumenstrom der ersten Sitzreinigungsströmung zweckmäßig die limitierende Größe darstellt.

Bei der Strömungsführung der durch Anlüften des zweiten Schließgliedes generierten zweiten Sitzreinigungsströmung ist wesentlich, dass diese an einer durch die Übergangsfläche und die erste Sitzfläche gebildeten ersten Umlaufkante definiert ablöst und an den das erste Schließglied im Bereich des Leckagehohlraumes berandenden Flächen sicher tangential und radial nach innen vorbeigeführt wird. Zu diesem Zweck besitzt eine dem Leckagehohlraum zugewandte stirnseitige Begrenzung des ersten Schließgliedes einen axialen Sicherheitsabstand von der Übergangsfläche, der unter allen möglichen fertigungstechnischen Gegebenheiten ein diesbezügliches Auftreffen verhindert und außerdem eine optimale Ejektorwirkung der zweiten Sitzreinigungsströmung im Sitzbereich des ersten Schließglieds sicherstellt. Es hat sich weiterhin als günstig mit Blick auf eine Vermeidung jeglicher Staudruckbildung herausgestellt, wenn die erste Umlaufkante mit einer kleinstmöglichen ersten Eckenabrundung abgerundet ist. Im Idealfall wäre hier eine scharfkantige Ausführung vorzusehen, die jedoch aus festigungstechnischen und praktischen Gründen (Gefährdung der ersten Dichtung) nicht zulässig ist.

Vorteilhaft bildet die ringförmige Ausnehmung im Gehäuse mit der Übergangsfläche einen senkrechten Umlenkwinkel (90 Grad), der eine sichere, kollisionsfreie Überströmung des ersten Schließgliedes durch die zweite Sitzreinigungsströmung am ehesten sicherstellt. Der Übergang zwischen der Ausnehmung und der Übergangsfläche wird dabei vorteilhaft mit einem Ausrundungsradius gerundet. Es kann auch ein stumpfer Umlenkwinkel (> 90 Grad) ausgeführt werden, wobei dieser die zweite Sitzreinigungsströmung zwar zielgerichteter in die Ablaufbohrung einleitet, jedoch mit Blick auf die erste Sitzreinigungsströmung staudruckbildend wirken kann, weil die Strömungsrichtung der ersten Sitzreinigungsströmung dann mit einer Richtungskomponente der Übergangsfläche übereinstimmt.

Um Staudruckbildung bei dem Eintritt der ersten Sitzreinigungsströmung in die Umlenkfläche im zweiten Schließglied zu vermeiden, ist es zweckmäßig, wenn die Umfangswand mit der Anschlagfläche eine zweite Umlaufkante ausbildet, die mit einer kleinstmöglichen zweiten Eckenabrundung abgerundet ist. Ein scharfkantiger Übergang in diesem Bereich ist aus fertigungstechnischen und praktischen Gründen nicht zulässig, ein relativ großer Abrundungsradius ist kontraproduktiv und führt zur unerwünschten Staudruckbildung.

Im Sinne einer optimalen Strömungsführung der ersten Sitzreinigungsströmung besteht die Kontur der Umlenkfläche aus einer Abfolge gekrümmter Abschnitte, die an ihren Übergangsstellen jeweils eine gemeinsame Tangente besitzen.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im übrigen Leckagehohlraum, soweit dies konstruktiv möglich ist, verzichtet wird. Diesbezüglich ist es zweckmäßig, wenn eine mit dem ersten Schließglied verbundene erste Verstellstange eine mit dem zweiten Schließglied verbundene, als Hohlstange ausgeführte zweite Verstellstange konzentrisch durchdringt, sich fliegend durch die Ablaufbohrung hindurch fortsetzt und an einem dem zweiten Schließglied abgewandten Ende des ersten Schließgliedes mit letzterem über wenigstens eine im Wesentlichen radial orientierte Traverse fest verbunden ist. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

Um den Strömungswiderstand insbesondere im querschnittsreduzierten Bereich der Ablaufbohrung zu verringern, sieht ein weiterer Vorschlag vor, dass eine mit dem ersten Schließglied verbundene erste Verstellstange wenigstens im axialen Erstreckungsbereich des Verbindungsteils in ihrem Querschnitt reduziert ist, und zwar auf einen querschnittsreduzierten Ventilstangenbereich.

Da die Endlagenbegrenzung des zweiten Schließgliedes an der Anschlagfläche im Bereich der Übergangsfläche erfolgt und somit die bislang im Stand der Technik notwendige feste (metallische) Anschlagfläche im Sitzbereich des zweiten Schließgliedes entfällt, ergeben sich nunmehr in diesem Sitzbereich gegenüber bekannten Lösungen mehr Freiheitsgrade für die Ausgestaltung des zweiten Schließgliedes. Prinzipiell kann in diesem Bereich eine rein radial, radial/axial und, bedingt möglich, auch eine rein axial wirkende zweite Dichtungen vorgesehen werden.

In diesem Zusammenhang kann die zweite Sitzfläche zylindrisch ausgeführt und durch die ringförmige Ausnehmung gebildet sein, wobei das zweite Schließglied eine zweite Dichtung aufweist, die radial gegenüber der zweiten Sitzfläche im Gleiteingriff abdichtet.

Eine die zweite Sitzfläche betreffende zweite Ausgestaltung kann vorsehen, dass die zweite Sitzfläche kegelförmig ausgeführt ist, und dass das zweite Schließglied eine zweite Dichtung aufweist, die axial/radial gegenüber der zweiten Sitzfläche im Gleit-/Druckeingriff abdichtet.

Gemäß einer dritten Ausgestaltung kann vorgesehen sein, dass die zweite Sitzfläche senkrecht zur Längsachse des Doppelsitzventils angeordnet ist, und dass das zweite Schließglied eine zweite Dichtung aufweist, die axial gegenüber der zweiten Sitzfläche im Druckeingriff abdichtet. Eine derartige Lösung mit den Vorteilen einer rein axial wirkenden Dichtung und eines rein axial wirkenden Sitztellers ist allerdings nur dann möglich, wenn die Dichtung derart duktil beschaffen ist, dass die feste und ggf. metallische Anlage des zweiten Schließgliedes mit seiner Anschlagfläche allein an der Übergangsfläche unter allen Bedingungen sichergestellt ist.

Eine hinreichende Drosselung der Sitzreinigungsströmungen ist eine notwendige Voraussetzung zur Lösung der anmeldungsgemäßen Aufgabe. Um die Drosselwirkung der Drosselspalte über das mit Bemessungsmaßnahmen für die radiale Spaltweite und die Länge erreichbare Maß hinaus zu vergrößern oder die gleiche Drosselwirkung mit einer größeren radialen Spaltweite und/oder einer kürzeren Spaltlänge zu erreichen, sieht ein weiterer Vorschlag vor, wobei eine turbulente Strömung im jeweiligen Drosselspalt vorausgesetzt wird, dass der zylindrische Ansatz auf seiner den zugeordneten Drosselspalt begrenzenden Umfangsfläche in Form einer Labyrinthdichtung ausgebildet ist, deren strömungsmechanische Wirkung an sich bekannt ist. Dies kann dadurch erreicht werden, dass die Labyrinthdichtung in Form einer Anzahl umlaufender Nuten ausgeführt ist. Eine andere Ausführungsform sieht vor, dass die Labyrinthdichtung in Form einer Anzahl über die Umfangsfläche des zylindrischen Ansatzes verteilter, am jeweiligen Ort ihrer Ausbildung flächenmäßig begrenzter, nicht miteinander verbundener Ausnehmungen ausgeführt ist.

## KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens zur Sitzreinigung eines Doppelsitzventils und eines Doppelsitzventils zur Durchführung des Verfahrens realisiert ist, werden anhand der Zeichnung ein Verfahren und ein Doppelsitzventil in einer bevorzugten Ausführungsform beschrieben. Es zeigen

**Figur 1**  im Meridianschnitt das erfindungsgemäße sitzreinigungsfähige Doppelsitzventil ohne Antrieb, wobei die Schließstellung des Doppelsitzventils dargestellt ist;

**Figur 1a**  im Meridianschnitt eine vergrößerte Darstellung des Sitzbereichs des Doppelsitzventils gemäß **Figur 1;**

**Figur 2**  im Meridianschnitt das Doppelsitzventil gemäß **Figur 1a,** wobei die Offenstellung des Doppelsitzventils dargestellt ist;

**Figur 3**  im Meridianschnitt das Doppelsitzventil gemäß **Figur 1a,** wobei sich das unabhängig angetriebene, unten liegende, als Schieberkolben ausgebildete erste Schließglied in seiner Sitzreinigungsstellung befindet;

**Figur 3a**  im Meridian- und Ausschnitt eine vergrößerte Darstellung der Sitzbereiche des Doppelsitzventils gemäß **Figur 3,** wobei nunmehr der Verlauf der ersten Sitzreinigungsströmung dargestellt ist;

**Figur 4**  im Meridianschnitt das Doppelsitzventil gemäß **Figur 1a,** wobei sich das abhängig angetriebene, oben liegende, gleichfalls als Schieberkolben ausgebildete zweite Schließglied in seiner Sitzreinigungsstellung befindet;

**Figur 4a**  im Meridian- und Ausschnitt eine vergrößerte Darstellung der Sitzbereiche des Doppelsitzventils gemäß **Figur 4,** wobei der Verlauf der zweiten Sitzreinigungsströmung dargestellt ist und

**Figur 4b**  im Meridian- und Ausschnitt eine vergrößerte Darstellung der Sitzbereiche des Doppelsitzventils gemäß **Figur 4,** wobei die Umlenkfläche gegenüber der Ausführung nach **Figur 4a** modifiziert und der sich damit ergebende Verlauf der zweiten Sitzreinigungsströmung dargestellt ist.

## DETAILLIERTE BESCHREIBUNG

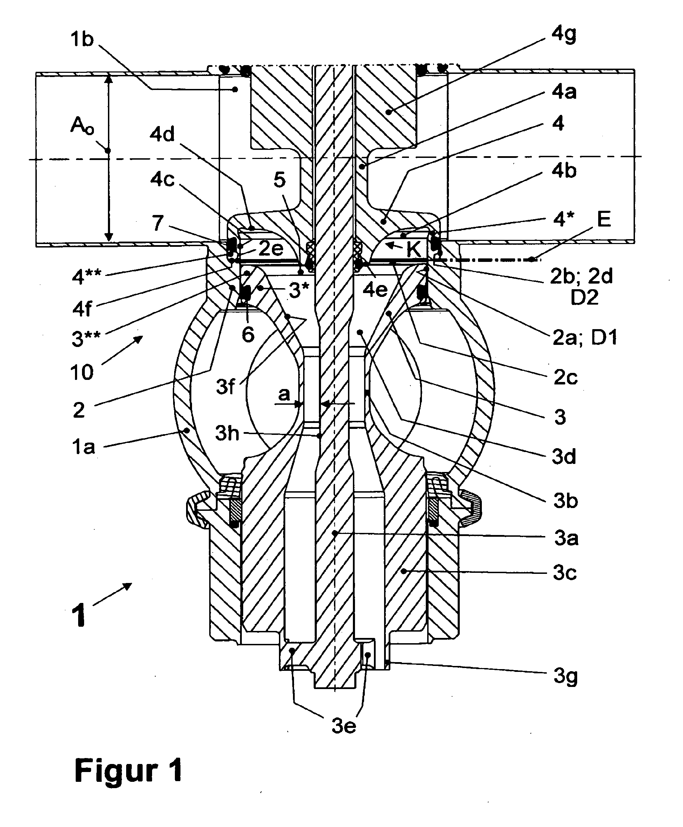

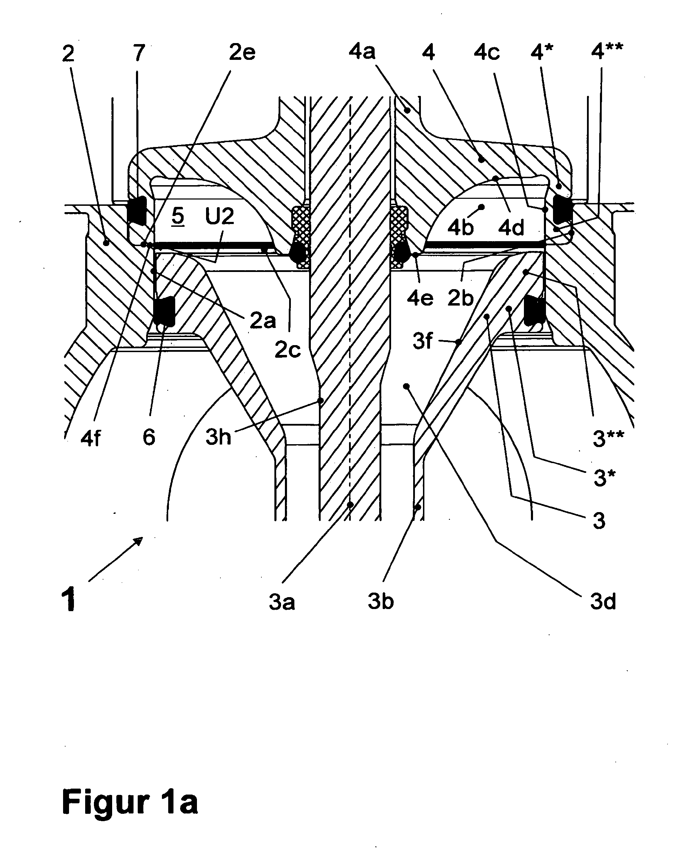

Das erfindungsgemäße Doppelsitzventil 1 **(Figuren 1, 1a)** besteht im Wesentlichen aus dem Ventilgehäuse 10 mit einem ersten und einem zweiten Ventilgehäuseteil 1a bzw. 1 b, den zwei unabhängig voneinander bewegbaren Schließgliedern 3 und 4 mit den jeweils zugeordneten Verstellstangen 3a bzw. 4a und einem Sitzring 2, der über eine innenseitige Verbindungsöffnung 2c eine Verbindung zwischen den Ventilgehäuseteilen 1 a, 1 b herstellt.

Das als Schieberkolben ausgebildete erste Schließglied 3 (aktives Schließglied) findet in der Schließstellung des Doppelsitzventils 1 in einer von der Verbindungsöffnung 2c gebildeten ersten Sitzfläche 2a, die als zylindrische Sitzfläche ausgeführt ist, dichtend Aufnahme. Hierzu ist in dem Schieberkolben 3 eine erste Dichtung 6 vorgesehen, die ausschließlich durch radiale Vorspannung mit der ersten Sitzfläche 2a zusammenwirkt (radiale Dichtung im Gleiteingriff). Das gleichfalls als Schieberkolben ausgebildete zweite Schließglied 4 wirkt in der Schließstellung des Doppelsitzventils 1 mit einer ebenfalls von der Verbindungsöffnung 2c gebildeten zweiten Sitzfläche 2b dichtend zusammen, die zylindrisch ausgeführt ist und die durch eine im Wesentlichen zylindrische ringförmige Ausnehmung 2d in der Verbindungsöffnung 2c gebildet ist. Die Abdichtung erfolgt über eine zweite Dichtung 7, die ausschließlich durch radiale Vorspannung mit der zweiten Sitzfläche 2b zusammenwirkt (radialen Dichtung im Gleiteingriff).

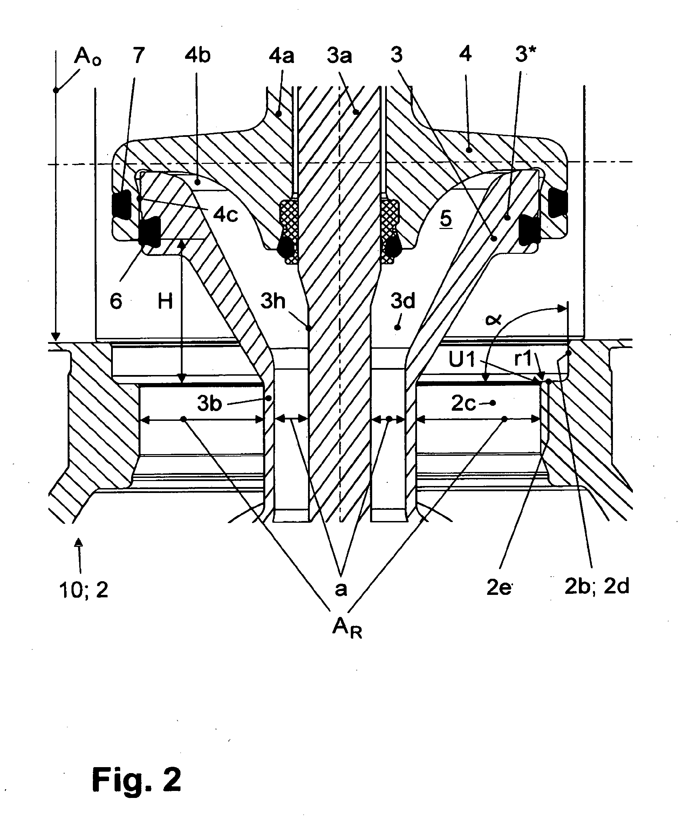

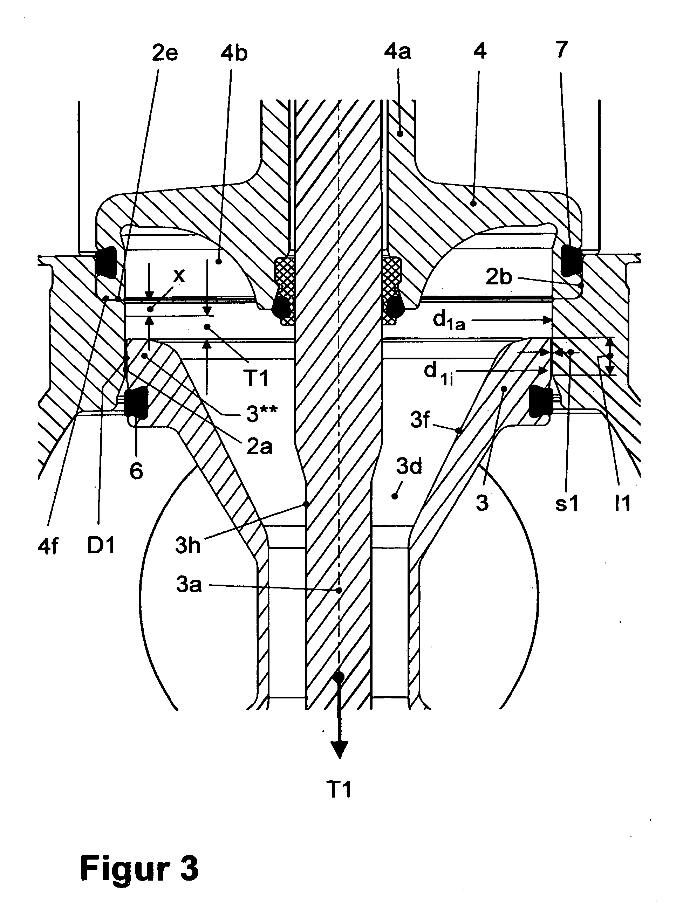

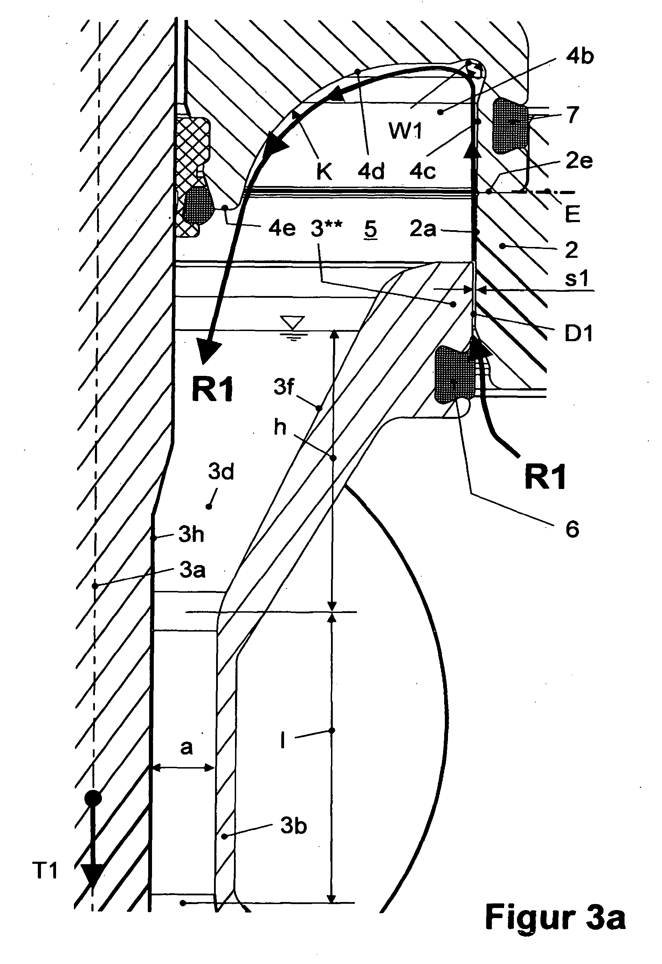

Die beiden Schließglieder 3, 4 bilden sowohl in der dargestellten Schließ- als auch in einer Offenstellung **(Figur 2)** zwischen sich einen Leckagehohlraum 5, der über eine Ablaufbohrung 3d, die von einem an dem ersten Schließglied 3 ausgebildeten, aus dem ersten Ventilgehäuseteil 1 a in die Umgebung des Doppelsitzventils 1 herausgeführten Rohrschaft berandet ist, mit der Umgebung des Doppelsitzventils 1 verbunden ist. Die Ablaufbohrung 3d insgesamt wird radial außenseits, beginnend vom Leckagehohlraum 5, von einem Einlauftrichter 3f, einem sich anschließenden Verbindungsteil 3b und einem sich an letzterem fortsetzenden Druckausgleichskolben 3c begrenzt, wobei letzter vorzugsweise einen der ersten Sitzfläche 2a entsprechenden oder annähernd entsprechenden Außendurchmesser aufweist Die Ablaufbohrung 3d durchdringt den Rohrschaft vorzugsweise konzentrisch, und sie verjüngt sich vom leckageraumseitigen Ende des ersten Schließgliedes 3 in dem Einlauftrichter 3f konusförmig und stetig bis zum Verbindungsteil 3b und weist in letzterem auf einer begrenzten Länge l einen unveränderten, minimalen Ablaufquerschnitt a auf **(Figuren 2, 3a)**.

Die Ventilgehäuseteile 1 a, 1 b sind entsprechend dem größten Nenndurchtrittsquerschnitt $A_o$ einer an letztere anschließbaren Rohrleitung ausgeführt **(Figur 2)** und über den die Verbindungsöffnung 2c innenseits ausbildenden Sitzring 2 miteinander verbunden. Das Verbindungsteil 3b des Rohrschaftes, das einen Abschnitt der Ablaufbohrung 3d innenseitig ausbildet, durchdringt beim vollen Öffnungshub H des Doppelsitzventils 1 mindestens die Verbindungsöffnung 2c und ist dort radial außenseitig derart bemessen, dass die Verbindungsöffnung 2c an ihrer engsten Stelle einen Ringraum mit einem Ringraum-Durchtrittsquerschnitt $A_R$ ausbildet, der mindestens dem Nenndurchtrittsquerschnitt $A_o$ entspricht ($A_R \geq A_o$).

Die mit dem ersten Schließglied 3 verbundene erste Verstellstange 3a durchdringt die mit dem zweiten Schließglied 4 verbundene, als Hohlstange ausgeführte, im Durchdringungsbereich mit dem zweiten Ventilgehäuseteil 1 b als zweiter Druckausgleichskolben 4g ausgebildete zweite Verstellstange 4a konzentrisch **(Figur 1)**, setzt sich fliegend durch die Ablaufbohrung 3d hindurch fort und ist an einem dem zweiten Schließglied 4 abgewandten Ende des ersten Schließgliedes 3, das als Ring 3g ausgebildet ist, mit letzterem über wenigstens eine im Wesentlichen radial orientierte Traverse 3e fest verbunden. Die erste Verstellstange 3a ist zur Verringerung des Strömungswiderstandes vorzugsweise wenigstens im axialen Erstreckungsbereich des Verbindungsteils 3b in ihrem Querschnitt reduziert, und zwar auf einen querschnittsreduzierten Ventilstangenbereich 3h. Durch die weit vom Leckagehohlraum 5 entfernt angeordneten Traversen 3e bleibt bei dieser bevorzugten Ausführungsform der Einlauftrichter 3f frei von Strömungsbarrieren, und es werden negative Rückwirkungen auf die Strömungsverhältnisse und das Strömungsbild im Leckagehohlraum 5 vermieden.

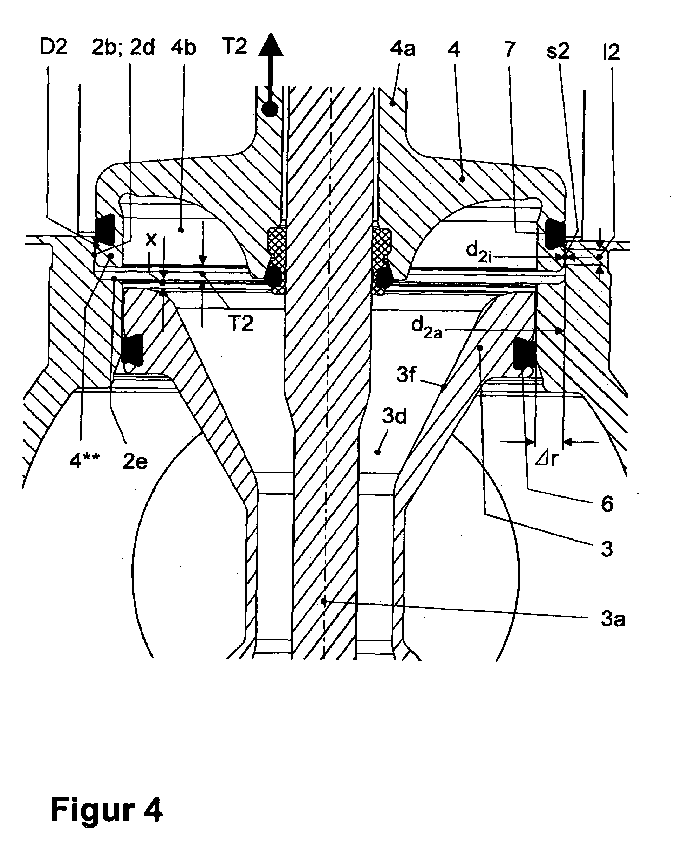

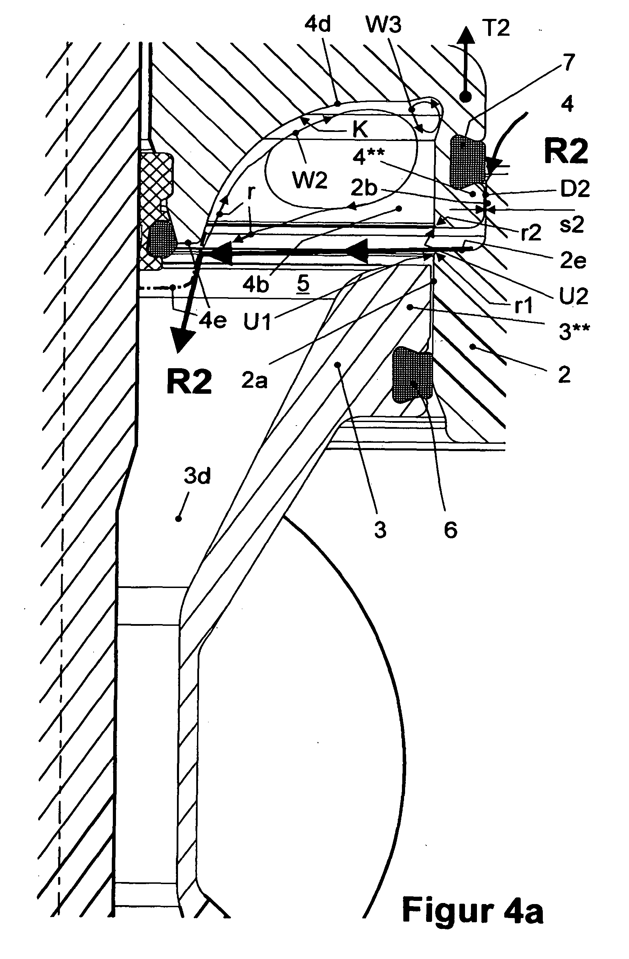

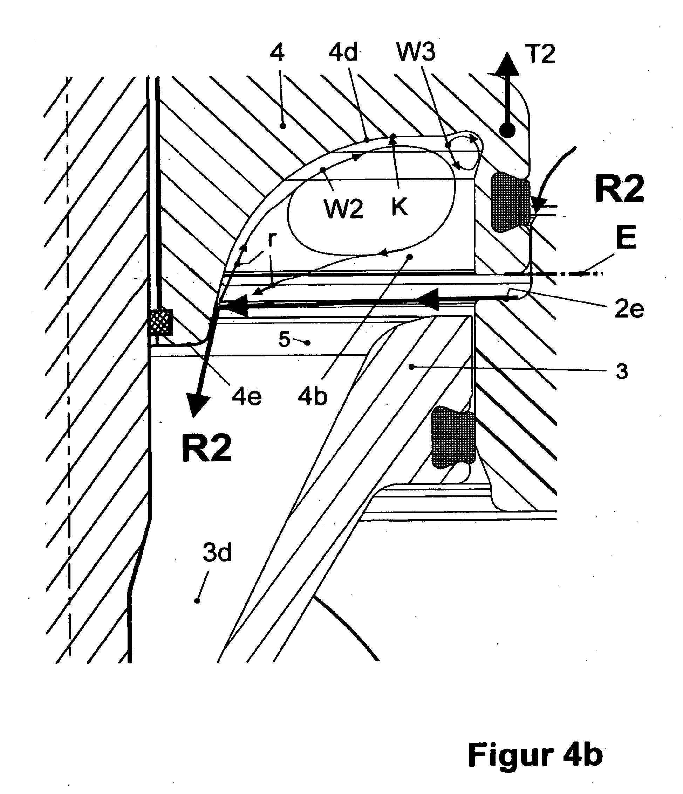

Jedes Schließglied 3, 4 weist an einem leckageraumseitigen Endabschnitt 3* bzw. 4* einen zylindrischen Ansatz 3** bzw. 4** auf, wobei letzterer mit dem zugeordneten Teil der Verbindungsöffnung 2c im Sitzring 2 einen ringförmigen ersten Drosselspalt D1 (siehe auch **Figuren 1, 3, 3a)** bzw. einen ringförmigen zweiten Drosselspalt D2 (siehe auch **Figuren 1, 4, 4a)** bildet.

Das zweite Schließglied 4 besitzt an seinem dem ersten Schließglied 3 zugewandten Ende eine Ausnehmung 4b mit einer im Wesentlichen zylindrischen, mit der zylindrischen ersten Sitzfläche 2a fluchtenden Umfangswand 4c **(Figuren 1** bis **4b)**. Diese Umfangswand 4c ist dabei so dimensioniert, dass sie während der Öffnungsbewegung den ersten Endabschnitt 3* und die radiale erste Dichtung 6 des ersten Schließgliedes 3 dichtend aufnimmt, bevor das zweite Schließglied 4 öffnet.

Die **Figuren 2** bis **4b** verdeutlichen in Verbindung mit **Figur 1** Einzelheiten des Sitzbereichs für das Doppelsitzventil 1. Das erste Schließglied 3 bildet mit seinem zylindrischen ersten Ansatz 3** **(Figur 3),** der einen ersten Schließglieddurchmesser $d_{1i}$ aufweist, und mit der zugeordneten ersten Sitzfläche 2a der Verbindungsöffnung 2c, die einen ersten Sitzdurchmesser $d_{1a}$ aufweist, den ersten Drosselspalt D1. Zwischen den beiden Durchmessern $d_{1a}$ und $d_{1i}$ wird auf einer ersten Drosselspaltlänge l1 die radiale erste Spaltweite s1 gebildet. Das zweite Schließglied 4 formt in gleicher Weise mit seinem zylindrischen zweiten Ansatz 4** **(Figur 4),** der einen zweiten Schließglieddurchmesser $d_{2i}$ aufweist, und mit der zylindrischen ringförmigen Ausnehmung 2d in der Verbindungsöffnung 2c, die gleichzeitig die zylindrische zweite Sitzfläche 2b mit einem zweiten Sitzdurchmesser $d_{2a}$ bildet, den zweiten Drosselspalt D2. Zwischen den beiden Durchmessern $d_{2a}$ und $d_{2i}$ wird auf einer zweiten Drosselspaltlänge 12 die radiale zweite Spaltweite s2 gebildet.

Der halbe Durchmesserunterschied zwischen der zweiten Sitzfläche 2b und der ersten Sitzfläche 2a **(Figuren 3, 4)** bildet einen radialen Erstreckungsbereich $\Delta r = (d_{2a} - d_{1a})/2$. In letzterem ist eine Übergangsfläche 2e zwischen der ersten Sitzfläche 2a und der zweiten Sitzfläche 2b vorgesehen, wobei wenigstens der in die erste Sitzfläche 2a ausmündende Endabschnitt der Übergangsfläche 2e mit der zylindrischen Mantelfläche der zweiten Sitzfläche 2b einen senkrechten Umlenkwinkel $\alpha$ bildet **(Figur 2)**. Dabei weist die zweite Sitzfläche 2b bzw. die ringförmige Ausnehmung 2d in der Verbindungsöffnung 2c einen mit einem Ausrundungsradius ausgeführten gerundeten Übergang zur Übergangsfläche 2e auf, wobei der Ausrundungsradius kleiner als der radiale Erstreckungsbereich $\Delta r$ ausgeführt ist. Der radiale Erstreckungsbereich $\Delta r$ wird so groß ausgeführt, dass eine in der Sitzreinigungsstellung des zweiten Schließgliedes 4 aus dem zweiten Drosselspalt D2 in den Leckagehohlraum 5 austretende zweite Sitzreinigungsströmung R2 **(Figuren 4a, 4b)** an der Übergangsfläche 2e zum Zentrum des Leckagehohlraumes 5 hin und sicher über das erste Schließglied 3 hinweg umgelenkt wird. Um sicherzustellen, dass die zweite Sitzreinigungsströmung R2 nicht vorzeitig in Richtung des ersten Schließgliedes 3 abgelenkt wird, ist eine von der Übergangsfläche 2e und der ersten Sitzfläche 2a gebildete erste Umlaufkante U1 mit einer kleinstmöglichen ersten Eckenabrundung r1 abgerundet, wodurch an dieser Stelle eine definierte Strömungsabrissstelle entsteht **(Figuren 2** und **4a).**

Durch diese Maßnahme wird weiterhin sichergestellt, dass die aus dem zweiten Drosselspalt D2 austretende zweite Sitzreinigungsströmung R2 nicht auf den Sitzbereich der ersten Dichtung 6 gerichtet ist. Darüber hinaus muss der radiale Erstreckungsbereich $\Delta r$ der Übergangsfläche 2e auch die Realisierung einer ventilgehäuseseitigen Anschlagfläche **(Figuren 1, 1a, 2)** für das zweite Schließglied 4 sicherstellen, damit ein dem Leckagehohlraum 5 unmittelbar benachbarter fester (metallischer) Anschlag des zweiten Schließgliedes 4 am Sitzring 2 zu verwirklichen ist. Die ventilgehäuseseitige Anschlagfläche bzw. Übergangsfläche 2e korrespondiert mit einer an der Stirnseite des zylindrischen zweiten Ansatzes 4** vorgesehenen Anschlagfläche 4f. Die ventilgehäuseseitige Anschlagfläche 2e und die schließgliedseitige Anschlagfläche 4f sind jeweils geradlinig und entsprechend dem Umlenkwinkel $\alpha$ im rechten Winkel zur Längsachse des Doppelsitzventils 1 ausgeführt ($\alpha$ = 90 Grad).

Die Umfangswand 4c der zylindrischen Ausnehmung 4b im zweiten Schließglied 4 geht an ihrem dem ersten Schließglied 3 abgewandten Ende in eine rotationssymmetrische Umlenkfläche 4d über **(Figuren 1** bis **4b),** und letztere berandet den restlichen, nicht von der Umfangswand 4c begrenzten Bereich der Ausnehmung 4b in Gänze und mündet erst an einem dem ersten Schließglied 3 zugewandten stirn- und radial innenseitigen Ende 4e des zweiten Schließgliedes 4 aus letzterem aus. Dabei ragt das stirn- und radial innenseitige Ende 4e des zweiten Schließgliedes 4, in der Längsachse des Doppelsitzventils 1 gesehen, über den gedachten Raum, der durch die durch die Anschlagfläche 4f hindurchgehende Ebene E stirnseitig begrenzt ist, hinaus. Ein beispielhaftes unterschiedliches Maß dieses Hinausragens unter den vorg. Bedingungen zeigen die **Figuren 4a** (durchgezogene Linie, strichpunktierte Linie) und **4b.** Auf die diesbezüglichen Konsequenzen für die zweite Sitzreinigungsströmung R2 wird nachfolgend noch hingewiesen.

Eine von der Umfangswand 4c und der Anschlagfläche 4f gebildete zweite Umlaufkante U2, die mit einer kleinstmöglichen zweiten Eckenabrundung r2 abgerundet ist **(Figur 4a),** grenzt in der Schließstellung des zweiten Schließgliedes 4 **(Figur 1a)** unmittelbar an die erste Sitzfläche 2a an. Im Meridianschnitt gesehen weist die Umlenkfläche 4d eine Kontur K mit knickfreiem Verlauf auf, wobei diese vorzugsweise aus einer Abfolge gekrümmter Abschnitte besteht (z.B. Kreisbogen, Ellipsen, Parabeln, Hyperbeln), die an ihren Übergangsstellen jeweils eine gemeinsame Tangente besitzen. Aus der Richtung einer ersten Sitzreinigungsströmung R1 **(Figur 3a)** im Bereich des stirn- und radial innenseitigen Endes 4e wird ersichtlich, unter welchem Richtungsvektor die Umlenkfläche 4d aus dem zweiten Schließglied 4 ausmündet, und es ist weiterhin ersichtlich, dass mit der erfindungsgemäß ausgestalteten Umlenkfläche 4d die erste Sitzreinigungsströmung R1 sehr zielgerichtet und stoßfrei in die Ablaufbohrung 3d umgelenkt und auf einem längsmöglichen Strömungsweg im zweiten Schließglied 4 zwangsweise geführt ist. Eine Kollision der ersten Sitzreinigungsströmung R1 mit den den Leckagehohlraum 5 berandenden Bereichen ist an keiner Stelle gegeben.

Eine dem Leckagehohlraum 5 zugewandte stirnseitige Begrenzung des ersten Schließgliedes 3 besitzt in dessen Schließstellung einen axialen Sicherheitsabstand x von der Übergangsfläche 2e **(Figur 4),** wobei dieser Sicherheitsabstand x zum Einen eine Kollision des ersten Schließglieds 3 mit der zweiten Sitzreinigungsströmung R2 **(Figuren 4a, 4b)** verhindert und zum Anderen eine hinreichende Ejektorwirkung der zweiten Sitzreinigungsströmung R2 im Sitzbereich des ersten Schließglieds 3 sicherstellt.

In der Offenstellung des Doppelsitzventils 1 **(Figur 2),** wenn der volle Öffnungshub H realisiert ist, wird deutlich, dass die an der Umfangswand 4c der Ausnehmung 4b radial wirkende erste Dichtung 6 für eine sichere Abdichtung der beiden Schließglieder 3, 4 zwischen dem Ventilgehäuse 10 einerseits und dem Leckagehohlraum 5 andererseits sorgt.

Die nach Vollzug eines ersten Teilhubes T1 aus dem ersten Drosselspalt D1 **(Figuren 3a, 3)** im Zuge der Sitzreinigung des ersten Schließgliedes 3 austretende erste Sitzreinigungsströmung R1 strömt zunächst an der ersten Sitzfläche 2a entlang, überbrückt den Kontaktspalt zwischen der Übergangsfläche 2e und der Anschlagfläche 4f ohne abzulösen, folgt der Umfangswand 4c, glättet strömungstechnisch einen der Aufnahme des Eckenbereichs des zylindrischen ersten Ansatzes 3** (s. auch **Figur 2)** dienenden Übergangsbereich in der Umlenkfläche 4d und ist durch den weiteren Verlauf der Umlenkfläche 4d radial nach innen und axial zum ersten Schließglied 3 hin bis zum Verlassen des zweiten Schließgliedes 4 an dem außerhalb der Ausnehmung 4b befindlichen stirn- und radial innenseitigen Ende 4e des zweiten Schließgliedes 4 zwangsweise geführt und gelangt schließlich zielgenau in den Eintrittsbereich der Ablaufbohrung 3d. Eine sich im vorstehend erwähnten Übergangsbereich ausbildende erste Wirbelströmung W1 hat keine nachteiligen Auswirkungen auf die Strömungs- und Druckverhältnisse im Leckagehohlraum 5. Auf die in **Figur 3a** dargestellte Hinterschneidung im vorstehend erwähnten Übergangsbereich kann ohne Weiteres verzichtet werden, wenn am ersten Schließglied 3 eine geeignete Abrundung vorgenommen wird. Die Umlenkfläche 4d erhält dann im in Rede stehenden Übergangsbereich den in **Figur 3a** dargestellten Verlauf der ersten Sitzreinigungsströmung R1. Das leckageraumseitige Ende des in **Figur 4** bezeichneten zweiten Drosselspaltes D2 ist durch die Anschlagposition (s. **Figur 3a)** des zweiten Schließgliedes 4 an der ventilgehäuseseitigen Anschlagfläche 2e weitestgehend dicht verschlossen. Reinigungsflüssigkeit der ersten Sitzreinigungsströmung R1 kann nicht in den zweiten Drosselspalt D2 und damit in den Bereich der zweiten Dichtung 7 eintreten. Selbst bei ggf. stark beschädigter oder ggf. gänzlich entfernter zweiter Dichtung 7 ist daher kein Durchtritt für Reinigungsflüssigkeit mehr gegeben, zumal durch die Ejektorwirkung der ersten Sitzreinigungsströmung R1 der in Rede stehende Kontaktspalt besaugt wird.

Gemäß den **Figuren 4a, 4b und 4** nimmt das zweite Schließglied 4 nach Vollzug eines zweiten Teilhubes T2 seine zweite Sitzreinigungsstellung ein. Die zweite Dichtung 7 ist dabei unter Bildung eines Eintrittsspaltes aus der zweiten Sitzfläche 2b herausgetreten, und der zylindrische zweite Ansatz 4** bildet zusammen mit der zweiten Sitzfläche 2b bzw. der ringförmigen Ausnehmung 2d den zweiten Drosselspalt D2, durch den die zweite Sitzreinigungsströmung R2 an die nunmehr überströmbare, freigelegte zweite Sitzfläche 2b herangeführt und in den Leckagehohlraum 5 eingeleitet werden kann. Die zweite Sitzfläche 2b ist zylindrisch ausgeführt, wobei sie unmittelbar durch die ringförmige Ausnehmung 2d gebildet ist. Diese Ausführungsform stellt in besonderer Weise sicher, dass das zweite Schließglied 4 in seiner Schließstellung mit der an der Stirnfläche seines zylindrischen zweiten Ansatzes 4** angeordneten Anschlagfläche 4f allein an der Übergangsfläche 2e anliegt.

Das erfindungsgemäße Doppelsitzventil 1 kann auch mit einer in den Figuren nicht dargestellten kegelförmigen zweiten Sitzfläche 2b ausgeführt werden, wobei sich letztere nach oben hin an die zylindrische ringförmige Ausnehmung 2d anschließt. Die zweite Dichtung 7 dichtet dann axial/radial gegenüber der zweiten Sitzfläche 2b ab. Das erfindungsgemäße Doppelsitzventil 1 erlaubt auch eine gleichfalls in den Figuren nicht dargestellte Ausgestaltung der zweiten Sitzfläche 2b senkrecht zur Längsachse des Doppelsitzventils 1, wobei die im zweiten Schließglied 4 angeordnete zweite Dichtung 7 axial gegenüber dieser zweiten Sitzfläche 2b im reinen Druckeingriff abdichtet. Diese Lösung ist allerdings nur dann möglich, wenn die axial wirkende zweite Dichtung 7 so duktil ist, dass die Anschlagposition des zweiten Schließgliedes 4 nach wie vor an der ventilgehäuseseitigen, im Bereich der in die erste Sitzfläche 2a austretenden Übergangsfläche 2e sichergestellt ist. Die zweite Sitzreinigungsströmung R2 verlässt den zweiten Drosselspalt D2 **(Figuren 4a, 4b)** zunächst entlang der ringförmigen Ausnehmung 2d und wird über die Übergangsfläche 2e zum Zentrum des Leckagehohlraumes 5 hin umgelenkt. Ein unmittelbares und direktes Bespritzen des Sitzbereichs der ersten Dichtung 6 wird dadurch sicher verhindert. Das erste Schließglied 3 ist bei der Sitzreinigung des zweiten Schließgliedes 4 in axialer Richtung um den Sicherheitsabstand x von der Übergangsfläche 2e entfernt positioniert **(Figur 4),** dass die zweite Sitzreinigungsströmung R2 unbehindert über das erste Schließglied 3 hinweg strömen kann. Abhängig von den gegebenen Druckverhältnissen und unter dem Einfluss der Schwerkraft bei Anordnung des Doppelsitzventils 1 gemäß Zeichnungslage nimmt der Flüssigkeitsstrahl einen leicht parabelförmigen Verlauf (nicht dargestellt), sodass die zweite Sitzreinigungsströmung R2 zielgerichtet in die Ablaufbohrung 3d gelangt. Durch diese Strömungsführung und Positionierung des ersten Schließgliedes 3 wird ein Besaugen des Sitzbereichs der ersten Dichtung 6 erreicht, sodass selbst bei Verlust oder signifikanter Beschädigung der ersten Dichtung 6 kein Reinigungsmittel in das benachbarte erste Ventilgehäuseteil 1a eintreten kann. Die von der Übergangsfläche 2e und der ersten Sitzfläche 2a gebildete erste Umlaufkante U1, die mit der kleinstmöglichen Eckenabrundung r1 abgerundet ist, begünstigt ein Ablösen der Sitzreinigungsströmung R2 an der ersten Umlaufkante U1 und verhindert somit eine staudruckbildende Anströmung des zur ersten Dichtung 6 führenden Ringspaltes durch diese Sitzreinigungsströmung R2 oder durch einen Teilstrom derselben.

Die **Figuren 4a, 4b** zeigen jeweils Strömungsverhältnisse, die sich einstellen, wenn die zweite Sitzreinigungsströmung R2 im Bereich oberhalb des stirn- und radial innenseitigen Endes 4e der in den Eintritt der Ablaufbohrung 3d hineingeführten Umlenkfläche 4d auf diese auftrifft. In diesem Falle erfährt die zweite Sitzreinigungsströmung R2 durch die Umlenkfläche 4d wenigstens eine in die Ablaufbohrung 3d gerichtete Umlenkung und, bei hinreichendem Abstand der Auftreffstelle von dem Ende 4e, zusätzlich eine zwangsweise Führung bis weit in den Eintritt der Ablaufbohrung 3d hinein. An der Auftreffstelle zweigt von der zweiten Sitzreinigungsströmung R2 ein nach oben in die Ausnehmung 4b gerichteter Teilstrom r ab, der dort eine entlang der Umlenkfläche 4d strömende zweite Wirbelströmung W2 und in der Hinterschneidung des Übergangsbereichs zwischen Umfangswand 4c und Umlenkfläche 4d eine gegenläufige dritte Wirbelströmung W3 ausbildet. Aus der zweiten Wirbelströmung W2 wird der in die zweite Sitzreinigungsströmung R2 rückgeführte Teilstrom r gespeist. Beide Wirbelströme W2, W3 sorgen für eine hinreichende Reinigung der die Ausnehmung 4b berandenden Flächen, ohne dass es zu einer Staudruckbildung an oder Direktanströmung der ersten Sitzfläche 2a kommt.

Der Drosselung der jeweiligen Sitzreinigungsströmung R1, R2 widmet die vorliegende Erfindung besondere Aufmerksamkeit. Der jeweilige Volumenstrom an Flüssigkeit der Sitzreinigungsströmung R1, R2 ist verfahrenstechnisch derart gedrosselt und/oder umgelenkt und geführt, dass der Druck an dem leckageraumseitigen Abschnitt der Sitzfläche 2b, 2a des jeweils in seiner Schließstellung verbleibenden, anderen Schließgliedes 4, 3 gleich oder kleiner dem Umgebungsdruck bzw. dem Atmosphärendruck des Doppelsitzventils 1 ist. Es wird dabei angestrebt, dass die durch die Sitzreinigungsströmungen R1, R2 generierten Volumenströme an Flüssigkeit derart gedrosselt sind, dass die Volumenströme einander gleich sind. Darüber hinaus sind die Volumenströme durch die vorstehende Drosselung so bemessen, dass sie ohne Rückstau in der Ablaufbohrung 3d durch letztere in die Umgebung des Doppelsitzventils 1 ablaufen.

Sollte es dennoch zu einem Rückstau im minimalen Ablaufquerschnitt a der Ablaufbohrung 3d kommen, dann kann die Ablaufbohrung 3d im Bereich ihres Eintritts ein Speichervolumen mit einer Füllhöhe h ausbilden **(Figur 3a),** deren hydrostatischer Druck $\Delta p_{hydr}$ ausreicht, um den jeweiligen Volumenstrom an Flüssigkeit der Sitzreinigungsströmung R1, R2 mindestens durch den minimalen Ablaufquerschnitt a, der sich, in Schwerkraftrichtung gesehen, an die Füllhöhe h anschließt, hindurchzufördern. Das Speichervolumen mit der Füllhöhe h wird vorzugsweise durch den Innenraum des Einlauftrichters 3f gebildet.

Der erste Drosselspalt D1 **(Figur 3)** wird durch die radiale erste Spaltweite s1 und die erste Drosselspaltlänge l1 und der zweite Drosselspalt D2 **(Figur 4)** wird durch die radiale zweite Spaltweite s2 und die zweite Drosselspaltlänge l2 gebildet. Eine bevorzugte Auslegung der Drosselspalte D1, D2 sieht vor, dass die zweite radiale Spaltweite s2 des zweiten Drosselspaltes D2 kleiner als die radiale erste Spaltweite s1 des ersten Drosselspaltes D1 ausgeführt ist. Es hat sich eine diesbezügliche quantitative Bemessungsvorschrift bewährt, nach der sich die vorstehend definierten relativen radialen Spaltweiten der Drosselspalte D1, D2 annähernd wie 2 : 1 verhalten. Es gilt in diesem Zusammenhang für die relative radiale Spaltweite des ersten Drosselspaltes D1 **(Figur 3)** nach Gleichung (1)

$$s1/[(d_{1i} + d_{1a})/2] \qquad\qquad (1)$$

und für die relative radiale Spaltweite des zweiten Drosselspaltes D2 **(Figur 4)** nach Gleichung (2)

$$s2/[(d_{2i} + d_{2a})/2], \qquad\qquad (2)$$

wobei die Drosselspalte D1, D2 in vorteilhafter Weise nach Gleichung (3) mit

$$\frac{\dfrac{s1}{\dfrac{d_{1i} + d_{1a}}{2}}}{\dfrac{s2}{\dfrac{d_{2i} + d_{2a}}{2}}} \approx \frac{2}{1} \qquad\qquad (3)$$

ausgelegt werden.

Die jeweilige Drosselwirkung der ringförmigen Drosselspalte D1, D2 wird neben ihrer radialen Spaltweite s1, s2, die sich jeweils exponentiell auswirkt, von der zugeordneten Länge l1, l2, die jeweils linearen Einfluss nimmt, bestimmt. Diese Bestimmungsgrößen lassen sich unter den vorg. Bedingungen so auslegen und aufeinander abstimmen, dass die in den jeweiligen Sitzreinigungsstellungen mit den Teilhüben T1, T2 durch die zugeordneten Sitzreinigungsströmungen R1, R2 generierten Volumenströme an Flüssigkeit gleich sind.

BEZUGSZEICHENLISTE DER VERWENDETEN ABKÜRZUNGEN

1      Doppelsitzventil
10    Ventilgehäuse
1a    erstes Ventilgehäuseteil
1b    zweites Ventilgehäuseteil

2      Sitzring
2a    erste Sitzfläche (zylindrische Sitzfläche)
2b    zweite Sitzfläche (axial; radial; axial/radial)
2c    Verbindungsöffnung
2d    ringförmige Ausnehmung
2e    Übergangsfläche

3      erstes Schließglied (Schieberkolben)
3*    erster Endabschnitt
3**  zylindrischer erster Ansatz
3a    erste Verstellstange
3b    Verbindungsteil

3c   erster Druckausgleichskolben

3d   Ablaufbohrung

3f   konusförmiger Einlauftrichter

3e   Traverse

3g   Ring

3h   querschnittsreduzierter Ventilstangenbereich

4   zweites Schließglied

4*   zweiter Endabschnitt

4**   zylindrischer zweiter Ansatz

4a   zweite Verstellstange

4b   Ausnehmung

4c   Umfangswand

4d   Umlenkfläche

4e   stirn- und radial innenseitiges Ende (des zweiten Schließgliedes 4)

4f   Anschlagfläche (schließgliedseitig)

4g   zweite Druckausgleichskolben

5   Leckagehohlraum

6   erste Dichtung (radial)

7   zweite Dichtung (axial; radial; axial/radial)

a   minimaler Ablaufquerschnitt

$d_{1a}$   erster Sitzdurchmesser

$d_{1i}$   erster Schließglieddurchmesser

$d_{2a}$   zweiter Sitzdurchmesser

$d_{2i}$   zweiter Schließglieddurchmesser

h   Füllhöhe

l   Länge (des minimalen Ablaufquerschnitts a)

l1   erste Drosselspaltlänge

l2   zweite Drosselspaltlänge

$\Delta p_{hydr}$   hydrostatischer Druck
($\Delta p_{hydr} = \rho$ g h; Dichte $\rho$ der Reinigungsflüssigkeit; Erdbeschleunigung g)

r   Teilstrom (aus zweiter Sitzreinigungsströmung R2)

$\Delta r$   radialer Erstreckungsbereich ($\Delta r = d_{2a} - d_{1a}$)

r1   erste Eckenabrundung (gehäuseseitig; Sitzring 2)

r2   zweite Eckenabrundung (zweites Schließglied 4)

s1   radiale erste Spaltweite (erster Drosselspalt D1)

s2   radiale zweite Spaltweite (zweiter Drosselspalt D2)

x   axialer Sicherheitsabstand

$\alpha$   Umlenkwinkel

$A_0$   Nenndurchtrittsquerschnitt

$A_R$   Ringraum-Durchtrittsquerschnitt

D1   erster Drosselspalt

D2   zweiter Drosselspalt

E   Ebene (als geometrischer Ort der Anschlagfläche 4f)

H   voller Öffnungshub (volle Offenstellung)

K   Kontur der Umlenkfläche 4b

R1    erste Sitzreinigungsströmung
R2    zweite Sitzreinigungsströmung

T1    erster Teilhub (erste Teiloffenstellung/erste Sitzreinigungsstellung)
T2    zweiter Teilhub (zweite Teiloffenstellung/zweite Sitzreinigungsstellung)

U1    erste Umlaufkante
U2    zweite Umlaufkante

W1    erste Wirbelströmung
W2    zweite Wirbelströmung
W3    dritte Wirbelströmung


**Patentansprüche**

1.  Verfahren zur Sitzreinigung eines Doppelsitzventils, das zwei seriell angeordnete, relativ zueinander bewegbare Schließglieder (3, 4) aufweist, die in der Schließstellung des Doppelsitzventils (1) das Überströmen von Fluiden von einem Ventilgehäuseteil (1a; 1b) eines Ventilgehäuses (10) in ein anderes (1b; 1a) verhindern, die sowohl in der Schließ- als auch in der Offenstellung einen Leckagehohlraum (5) zwischen sich begrenzen, der mit der Umgebung des Doppelsitzventils (1) über eine Ablaufbohrung (3d), die von einem an dem ersten Schließglied (3) ausgebildeten, aus dem Ventilgehäuse (10) herausgeführten Rohrschaft berandet ist, verbunden ist,
    wobei in der Schließstellung das als Schieberkolben ausgebildete erste Schließglied (3) in einer die Ventilgehäuseteile (1 a, 1 b) miteinander verbindenden, eine zylindrische erste Sitzfläche (2a) ausbildenden Verbindungsöffnung (2c) dichtend Aufnahme findet und im Zuge seiner Öffnungsbewegung in einer Ausnehmung (4b) in einem zweiten Schließglied (4), das einer zweiten Sitzfläche (2b) zugeordnet ist, dichtend Aufnahme findet und das zweite Schließglied (4) bei der weiteren Öffnungsbewegung gleichfalls in eine Offenstellung (H) überführt wird,
    wobei die Ausnehmung (4b) eine zylindrische, mit der zylindrischen ersten Sitzfläche (2a) fluchtende Umfangswand (4c) besitzt und die Umfangswand (4c) so dimensioniert ist, dass sie während der Öffnungsbewegung das erste Schließglied (3) dichtend aufnimmt,
    wobei die Schließglieder (3, 4) unabhängig voneinander durch einen Teilhub (T1, T2) jeweils spaltweit in eine Sitzreinigungsstellung zwecks Spülung ihrer Sitzflächen (2a, 2b) überführbar sind,
    wobei eine in der jeweiligen Sitzreinigungsstellung generierte Sitzreinigungsströmung (R1, R2) in einem am zugeordneten Schließglied (3, 4) leckageraumseitig angeordneten Drosselspalt (D1, D2) eine Drosselung erfährt, bevor sie in den Leckageraum (5) eintritt,
    wobei die durch das erste Schließglied (3) generierte erste Sitzreinigungsströmung (R1) an einer rotationssymmetrischen Umlenkfläche (4d), die in einem radial außenseitigen Teil der Ausnehmung (4b) im zweiten Schließglied (4) ausgebildet ist, eine stoßfreie, in die Ablaufbohrung (3d) gerichtete Umlenkung erfährt, und
    wobei die Umfangswand (4c) an ihrem dem ersten Schließglied (3) abgewandten Ende in die Umlenkfläche (4d) übergeht,
    **dadurch gekennzeichnet,**
    **dass** die erste Sitzreinigungsströmung (R1) durch die Umlenkfläche (4d) radial nach innen und axial zum ersten Schließglied (3) hin bis zum Verlassen des zweiten Schließgliedes (4) an einem außerhalb der Ausnehmung (4b) befindlichen stirn- und radial innenseitigen Ende (4e) des zweiten Schließgliedes (4) zwangsweise geführt ist.

2.  Verfahren nach Anspruch 1,
    **dadurch gekennzeichnet,**
    **dass** die zwangsweise Führung der ersten Sitzreinigungsströmung (R1) bis in den Eintritt der Ablaufbohrung (3d) hinein aufrechterhalten wird.

3.  Verfahren nach Anspruch 1 oder 2,
    **dadurch gekennzeichnet,**
    **dass** die zweite Sitzreinigungsströmung (R2) durch die Umlenkfläche (4d) eine in die Ablaufbohrung (3d) gerichtete Umlenkung erfährt.

4.  Verfahren nach Anspruch 3,
    **dadurch gekennzeichnet,**
    **dass** die zweite Sitzreinigungsströmung (R2) durch die Umlenkfläche (4d) zusätzlich eine zwangsweise Führung bis in den Eintritt der Ablaufbohrung (3d) hinein erfährt.

5. Verfahren nach einem der vorhergehenden Ansprüche,
**dadurch gekennzeichnet,**
**dass** die Ablaufbohrung (3d) im Bereich ihres Eintritts ein Speichervolumen mit einer Füllhöhe (h) ausbildet, deren hydrostatischer Druck ($\Delta p_{hydr}$) ausreicht, um den jeweiligen Volumenstrom an Flüssigkeit der Sitzreinigungsströmung (R1, R2) mindestens durch einen minimalen Ablaufquerschnitt (a) der Ablaufbohrung (3d), der sich, in Schwerkraftrichtung gesehen, an die Füllhöhe (h) anschließt, hindurchzufördern.

6. Verfahren nach einem der vorhergehenden Ansprüche,
**dadurch gekennzeichnet,**
**dass** der jeweilige Volumenstrom an Flüssigkeit der Sitzreinigungsströmung (R1, R2) derart gedrosselt und/oder umgelenkt und geführt ist, dass der Druck an dem leckageraumseitigen Abschnitt der Sitzfläche (2b, 2a) des jeweils in seiner Schließstellung verbleibenden, anderen Schließgliedes (4, 3) gleich oder kleiner dem Umgebungsdruck des Doppelsitzventils (1) ist.

7. Verfahren nach einem der vorhergehenden Ansprüche,
**dadurch gekennzeichnet,**
**dass** die durch die Sitzreinigungsströmungen (R1, R2) generierten Volumenströme an Flüssigkeit derart gedrosselt sind, dass die Volumenströme einander gleich sind.

8. Verfahren nach einem der vorhergehenden Ansprüche,
**dadurch gekennzeichnet,**
**dass** die durch die Sitzreinigungsströmungen (R1, R2) generierten Volumenströme an Flüssigkeit derart gedrosselt sind, dass die Volumenströme ohne Rückstau in der Ablaufbohrung (3d) durch letztere in die Umgebung des Doppelsitzventils (1) ablaufen.

9. Doppelsitzventil zur Durchführung des Verfahrens nach einem der vorhergehenden Ansprüche,

- wobei das erste Schließglied (3) an seinem ersten Endabschnitt (3*) eine erste Dichtung (6) aufweist, die radial gegenüber der in der Verbindungsöffnung (2c) ausgebildeten zylindrischen ersten Sitzfläche (2a) abdichtet,
- wobei das zweite Schließglied (4) an seinem dem ersten Schließglied (3) zugewandten zweiten Endabschnitt (4*) die Ausnehmung (4b) mit einer zylindrischen, mit der zylindrischen ersten Sitzfläche (2a) fluchtenden Umfangswand (4c) besitzt, und die Umfangswand (4c) der Ausnehmung (4b) so dimensioniert ist, um während der Öffnungsbewegung den ersten Endabschnitt (3*) und die radiale erste Dichtung (6) des ersten Schließgliedes (3) dichtend aufzunehmen, bevor das zweite Schließglied (4) öffnet,
- wobei das zweite Schließglied (4) durch einen der Öffnungsbewegung gleichgerichteten zweiten Teilhub (T2) und das erste Schließglied (3) durch
- einen der Öffnungsbewegung entgegengerichteten ersten Teilhub (T1) in seine jeweilige Sitzreinigungsstellung überführbar sind,
- wobei an jedem Endabschnitt (3*, 4*) leckageraumseitig ein zylindrischer Ansatz (3**, 4**) angeordnet ist, der mit der zugeordneten Verbindungsöffnung (2c) den ringförmigen Drosselspalt (D1, D2) bildet,
- wobei die erste Sitzfläche (2a) einen Durchmesser aufweist, der kleiner ist als der Durchmesser einer dem zweiten Schließglied (4) zugeordneten ringförmigen Ausnehmung (2d) in der Verbindungsöffnung (2c), und mit einer Übergangsfläche (2e) zwischen der ersten Sitzfläche (2a) und der ringförmigen Ausnehmung (2d),
- wobei das zweite Schließglied (4) in seiner Schließstellung mit einer an einer Stirnfläche seines zylindrischen zweiten Ansatzes (4**) angeordneten Anschlagfläche (4f) an der Übergangsfläche (2e) anliegt, und zwar unmittelbar an die erste Sitzfläche (2a) angrenzend, und
- wobei die Umfangswand (4c) an ihrem dem ersten Schließglied (3) abgewandten Ende in die Umlenkfläche (4d) übergeht, deren Kontur (K), im Meridianschnitt gesehen, einen knickfreien Verlauf aufweist,

**dadurch gekennzeichnet,**
**dass** die Umlenkfläche (4d) den restlichen, nicht von der Umfangswand (4c) begrenzten Bereich der Ausnehmung (4b) in Gänze berandet und an einem dem ersten Schließglied (3) zugewandten stirn- und radial innenseitigen Ende (4e) des zweiten Schließgliedes (4) derart aus letzterem ausmündet,
**dass** das stirn- und radial innenseitige Ende (4e) des zweiten Schließgliedes (4), in der Längsachse des Doppelsitzventils (1) gesehen, über einen gedachten Raum, der durch eine durch die Anschlagfläche (4f) hindurchgehende Ebene (E) stirnseitig begrenzt ist, hinausragt.

10. Doppelsitzventil nach Anspruch 9,
**dadurch gekennzeichnet,**
**dass** die Ventilgehäuseteile (1a, 1b) entsprechend dem größten Nenndurchtrittsquerschnitt ($A_o$) einer an letztere anschließbaren Rohrleitung ausgeführt und über einen die Verbindungsöffnung (2c) innenseits ausbildenden Sitzring (2) miteinander verbunden sind, dass ein Verbindungsteil (3b) des Rohrschaftes, das einen Abschnitt der Ablaufbohrung (3d) innenseitig ausbildet, beim vollen Öffnungshub (H) des Doppelsitzventils (1) mindestens die Verbindungsöffnung (2c) durchdringt und dort radial außenseitig derart bemessen ist, dass die Verbindungsöffnung (2c) an ihrer engsten Stelle einen Ringraum mit einem Ringraum-Durchtrittsquerschnitt ($A_R$) ausbildet, der mindestens dem Nenndurchtrittsquerschnitt ($A_o$) entspricht ($A_R \geq A_o$)

11. Doppelsitzventil nach Anspruch 10,
**dadurch gekennzeichnet,**
**dass** sich die Ablaufbohrung (3d) vom leckageraumseitigen Ende des ersten Schließgliedes (3) in einem Einlauftrichter (3f) konusförmig und stetig bis zum Verbindungsteil (3b) verjüngt und in letzterem auf einer begrenzten Länge (l) einen unveränderten, minimalen Ablaufquerschnitt (a) aufweist.

12. Doppelsitzventil nach Anspruch 10 oder 11,
**dadurch gekennzeichnet,**
**dass** sich die Ablaufbohrung (3d) im Anschluss an den Verbindungsteil (3b) in einem als erster Druckausgleichskolben (3c) ausgebildeten Abschnitt des Rohrschaftes erweitert, wobei der Druckausgleichskolben (3c) einen der ersten Sitzfläche (2a) entsprechenden Außendurchmesser aufweist.

13. Doppelsitzventil nach Anspruch 11 oder 12,
**dadurch gekennzeichnet,**
**dass** der Einlauftrichter (3f) mit einem sich in ihm aufstauenden Volumen an Flüssigkeit eine Füllhöhe (h) ausbildet, deren hydrostatischer Druck ($\Delta p_{hydr}$) ausreicht, um den in der jeweiligen Sitzreinigungsstellung generierten Volumenstrom an Flüssigkeit mindestens durch den minimalen Ablaufquerschnitt (a) des Verbindungsteils (3b), das sich, in Schwerkraftrichtung gesehen, an die Füllhöhe (h) anschließt, hindurchzufördern.

14. Doppelsitzventil nach einem der Ansprüche 9 bis 13,
**dadurch gekennzeichnet,**
**dass** eine radiale zweite Spaltweite (s2) des zweiten Drosselspaltes (D2) kleiner als eine radiale erste Spaltweite (s1) des ersten Drosselspaltes (D1) ausgeführt ist.

15. Doppelsitzventil nach Anspruch 14,
**dadurch gekennzeichnet,**
**dass** die ringförmigen Drosselspalte (D1, D2) mit ihrer radialen Spaltweite (s1, s2) und einer zugeordneten Länge (l1, l2) so ausgelegt sind, dass die in den jeweiligen Sitzreinigungsstellungen mit den Teilhüben (T1, T2) durch die zugeordneten Sitzreinigungsströmungen (R1, R2) generierten Volumenströme an Flüssigkeit gleich sind.

16. Doppelsitzventil nach einem der Ansprüche 9 bis 15,
**dadurch gekennzeichnet,**
**dass** die Kontur (K) aus einer Abfolge gekrümmter Abschnitte besteht, die an ihren Übergangsstellen jeweils eine gemeinsame Tangente besitzen.

17. Doppelsitzventil nach einem der Ansprüche 9 bis 16,
**dadurch gekennzeichnet,**
**dass** eine mit dem ersten Schließglied (3) verbundene erste Verstellstange (3a) wenigstens im axialen Erstreckungsbereich des Verbindungsteils (3b) in ihrem Querschnitt reduziert ist, und zwar auf einen querschnittsreduzierten Ventilstangenbereich (3h).

18. Doppelsitzventil nach einem der Ansprüche 9 bis 17,
**dadurch gekennzeichnet,**
**dass** der zylindrische Ansatz (3**, 4**) auf seiner den zugeordneten Drosselspalt (D1, D2) begrenzenden Umfangsfläche in Form einer Labyrinthdichtung ausgebildet ist.

**19.** Doppelsitzventil nach Anspruch 18,
**dadurch gekennzeichnet,**
**dass** die Labyrinthdichtung in Form einer Anzahl umlaufender Nuten ausgeführt ist.

**20.** Doppelsitzventil nach Anspruch 18,
**dadurch gekennzeichnet,**
**dass** die Labyrinthdichtung in Form einer Anzahl über die Umfangsfläche des zylindrischen Ansatzes (3\*\*, 4\*\*) verteilter, am jeweiligen Ort ihrer Ausbildung flächenmäßig begrenzter, nicht miteinander verbundener Ausnehmungen ausgeführt ist.

**Claims**

**1.** A method for cleaning the seat of a double seat valve, which has two series-arranged closing members (3, 4) movable relative to each other, which prevent the overflow of fluids from one valve housing part (1a; 1b) of a valve housing (10) into another valve housing part (1b; 1a) in the closed position of the double seat valve (1), which delimit both in the closed as well as in the open position a leakage hollow space (5) between each other, which is connected with the surroundings of the double seat valve (1) via a discharge hole (3d), which is bordered by a tube shaft designed on the first closing member (3) and guided out of the valve housing (10),
wherein, in the closed position, the first closing member (3) designed as a slide piston is received in a sealing manner in a connection opening (2c) interconnecting the valve housing parts (1a, 1b) and forming a cylindrical first seat (2a) and is received in a sealing manner in the course of its opening movement in a recess (4b) in a second closing member (4), which is assigned to a second seat (2b), and the second closing member (4) is also transferred to an open position (H) during the further opening movement,
wherein the recess (4b) has a cylindrical circumferential wall (4c) flush with the cylindrical first seat (2a) and the circumferential wall (4c) is dimensioned such that it receives in a sealing manner the first closing member (3) during the opening movement,
wherein the closing members (3, 4) are transferable independently of each other through a partial stroke (T1, T2) respectively at a gap's width into a seat cleaning position for the purpose of the flushing of their seats (2a, 2b),
wherein a seat cleaning flow (R1, R2) generated in the respective seat cleaning position experiences a flow restriction in a throttle gap (D1, D2) arranged on the leakage-space side on the associated closing member (3, 4), before it enters the leakage space (5),
wherein the first seat cleaning flow (R1) generated by the first closing member (3) on a rotationally symmetrical deflection surface (4d), which is designed in a radially outside part of the recess (4b) in the second closing member (4), experiences a shockless deflection directed into the discharge hole (3d) and
wherein the circumferential wall (4c) on its end facing away from the first closing member (3) merges into the deflection surface (4d),
**characterized in that**
the first seat cleaning flow (R1) is forcibly guided through the deflection surface (4d) radially inwards and axially to the first closing member (3) until leaving the second closing member (4) at a front and radially inside end (4e) of the second closing member (4) located outside the recess (4b).

**2.** The method according to claim 1,
**characterized in that**
the forcible guidance of the first seat cleaning flow (R1) is maintained up to into the entry of the discharge hole (3d).

**3.** The method according to claim 1 or 2,
**characterized in that**
the second seat cleaning flow (R2) experiences a deflection directed into the discharge hole (3d) through the deflection surface (4d).

**4.** The method according to claim 3,
**characterized in that**
the second seat cleaning flow (R2) additionally experiences a forcible guidance up to into the entry of the discharge hole (3d) through the deflection surface (4d).

**5.** The method according to one of the preceding claims,
**characterized in that**

the discharge hole (3d) forms in the area of its entry a storage volume with a fill level (h), the hydrostatic pressure ($\Delta p_{hydr}$) of which suffices to convey the respective volume flow of liquid of the seat cleaning flow (R1, R2) at least through a minimal discharge cross-section (a) of the discharge hole (3d), which connects to the fill level (h) when seen in the gravitational direction.

6. The method according to one of the preceding claims
**characterized in that**
the respective volume flow of liquid of the seat cleaning flow (R1, R2) is restricted and/or diverted and guided such that the pressure on the leakage space side section of the seat (2b, 2a) of the respective other closing member (4, 3) remaining in its closed position is the same or smaller than the ambient pressure of the double seat valve (1).

7. The method according to one of the preceding claims
**characterized in that**
the volume flows of liquid generated by the seat cleaning flows (R1, R2) are restricted such that the volume flows are the same.

8. The method according to one of the preceding claims
**characterized in that**
the volume flows of liquid generated by the seat cleaning flows (R1, R2) are restricted such that the volume flows flow without backup in the discharge hole (3d) through the latter into the surroundings of the double seat valve (1).

9. A double seat valve for performing the method according to one of the preceding claims,

- wherein the first closing member (3) has a first seal (6) on its first end section (3*), which is sealed off radially with respect to the cylindrical first seat (2a) formed in the connection opening (2c),
- wherein the second closing member (4) has the recess (4b) with a cylindrical circumferential wall (4c) flush with the cylindrical first seat (2a) on its second end section (4*) facing the first closing member (3), and the circumferential wall (4c) of the recess (4b) is dimensioned in order to receive in a sealing manner during the opening movement the first end section (3*) and the radial first seal (6) of the first closing member (3), before the second closing member (4) opens,
- wherein the second closing member (4) can be conveyed into its respective seat cleaning position through a second partial stroke (T2) in alignment with the opening movement and the first closing member (3) through a first partial stroke (T1) opposing the opening movement,
- wherein on each end section (3*, 4*) on the leakage space side a cylindrical appendage (3**, 4**) is arranged, which forms the annular throttle gap (D1, D2) with the associated connection opening (2c),
- wherein the first seat (2a) has a diameter that is smaller than the diameter of an annular recess (2d) assigned to the second closing member (4) in the connection opening (2c), and with a transition surface (2e) between the first seat (2a) and the annular recess (2d),
- wherein the second closing member (4) in its closed position rests on the transition surface (2e) with a stop surface (4f) arranged on a front surface of its cylindrical second appendage (4**), and namely directly adjacent to the first seat (2a) and
- wherein the circumferential wall (4c) merges into the deflection surface (4d) on its end facing away from the first closing member (3), the contour (K) of which, seen in the meridian cut, has a kink-free progression,

**characterized in that**
the deflection surface (4d) entirely borders the rest of the area of the recess (4b) not delimited by the circumferential wall (4c) and leads out of the second closing member at a front and radially inside end (4e) of the second closing member (4) facing the first closing member (3) such that the front and radially inside end (4e) of the second closing member (4), seen in the longitudinal axis of the double seat valve (1), protrudes beyond an imaginary space, which is delimited on the front side by a plane (E) passing through the stop surface (4f).

10. The double seat valve according to claim 9,
**characterized in that**
the valve housing parts (1a, 1b) are designed according to the largest nominal passage cross-section (A_O) of a pipeline connectable to the valve housing parts and interconnected via a seat ring forming the connection opening (2c) on the inside, that a connection part (3b) of the tube shaft, which forms a section of the discharge hole (3d) on the inside, penetrates at least the connection opening (2c) during the full opening stroke (H) of the double seat valve (1) and is dimensioned there radially on the outside such that the connection opening (2c) at its narrowest spot forms a ring space with a ring space passage cross-section ($A_R$), which corresponds at least with the nominal passage cross-section ($A_O$) ($A_R \geq A_O$).

11. The double seat valve according to claim 10,
**characterized in that**
the discharge hole (3d) tapers from the leakage space side end of the first closing member (3) in an intake hopper (3f) in a conical manner and constantly up to the connection part (3b) and has in the latter on a restricted length (1) an unchanged, minimum discharge cross-section (a).

12. The double seat valve according to claim 10 or 11,
**characterized in that**
the discharge hole (3d) in the connection to the connection part (3b) expands in a section of the tube shaft designed as the first pressure equalization piston (3c), wherein the pressure equalization piston (3c) has an outer diameter corresponding with the first seat (2a).

13. The double seat valve according to claim 11 or 12,
**characterized in that**
the intake hopper (3f) with a volume of liquid backing up in it forms a fill level (h), the hydrostatic pressure ($\Delta p_{hydr}$) of which suffices to convey the volume flow of liquid generated in the respective seat cleaning position at least through the minimum discharge cross-section (a) of the connection part (3b), which connects to the fill level (h) when seen in the gravitational direction.

14. The double seat valve according to one of claims 9 to 13,
**characterized in that**
a radial second gap width (s2) of the second throttle gap (D2) is designed smaller than a radial first gap width (s1) of the first throttle gap (D1).

15. The double seat valve according to claim 14,
**characterized in that**
the annular throttle gap (D1, D2) with its radial gap width (s1, s2) and an associated length (11,12) are designed such that the volume flows of liquid generated by the associated seat cleaning flows (R1, R2) in the respective seat cleaning positions with the partial strokes (T1, T2) are the same.

16. The double seat valve according to one of claims 9 to 15,
**characterized in that**
the contour (K) consists of a sequence of bent sections, each of which has a common tangent at their transition points.

17. The double seat valve according to one of claims 9 to 16,
**characterized in that**
a first adjustment rod (3a) connected with the first closing member (3) is reduced in its cross-section at least in the axial extension area of the connection part (3b) and namely to a cross-sectionally reduced valve rod area (3h).

18. The double seat valve according to one of claims 9 to 17,
**characterized in that**
the cylindrical appendage (3**, 4**) is designed in the form of a labyrinth seal on its circumferential surface bordering the associated throttle gap (D1, D2).

19. The double seat valve according to claim 18,
**characterized in that**
the labyrinth seal is designed in the form of a number of circumferential grooves.

20. The double seat valve according to claim 18,
**characterized in that**
the labyrinth seal is designed in the form of a number of non-interconnected recesses distributed over the circumferential surface of the cylindrical appendage (3**, 4**) and restricted in terms of area at the respective location of their formation.

**Revendications**

1. Procédé permettant de nettoyer les sièges d'une soupape à double siège présentant deux organes de fermeture (3, 4) agencés en série et déplaçables l'un par rapport à l'autre, lesquels empêchent le débordement de fluides d'une partie de boîtier de soupape (1 a ; 1 b) d'un boîtier de soupape (10) dans une autre (1 b ; 1 a) dans la position de fermeture de la soupape à double siège (1), lesquels délimitent entre eux, aussi bien dans la position de fermeture que dans la position ouverte, une cavité de fuite (5) reliée à l'environnement de la soupape à double siège (1) par le biais d'un perçage d'écoulement (3d) bordé par un corps de conduit formé sur le premier organe de fermeture (3), faisant saillie hors du boîtier de soupape (10),

   dans lequel, dans la position de fermeture, le premier organe de fermeture (3) conçu comme un piston de tiroir est accueilli de façon étanche dans une ouverture de liaison (2c) formant une première surface de siège cylindrique (2a) et reliant ensemble les parties de boîtier de soupape (1 a, 1 b), et accueillie de façon étanche dans un évidement (4b) dans un deuxième organe de fermeture (4) attribué à une deuxième surface de siège (2b) au cours de son mouvement d'ouverture, et le deuxième organe de fermeture (4) est également transféré dans une position ouverte (H) lors d'un mouvement d'ouverture supplémentaire,

   dans lequel l'évidement (4b) possède une paroi périphérique (4c) cylindrique alignée avec la première surface de siège cylindrique (2a), et la paroi périphérique (4c) est dimensionnée de manière à accueillir de façon étanche le premier organe de fermeture (3) pendant le mouvement d'ouverture,

   dans lequel les organes de fermeture (3, 4) peuvent être transférés indépendamment l'un de l'autre, respectivement par intervalles, dans une position de nettoyage de sièges par une levée partielle (T1, T2) en vue du rinçage de leurs surfaces de siège (2a, 2b),

   dans lequel un flux de nettoyage de sièges (R1, R2) généré dans la position de nettoyage de sièges respective rencontre un étranglement dans une fente d'étranglement (D1, D2) agencée du côté de la cavité de fuite sur l'organe de fermeture (3, 4) correspondant, avant d'entrer dans la cavité de fuite (5),

   dans lequel le premier flux de nettoyage de sièges (R1) généré par le premier organe de fermeture (3) rencontre une déviation sans à-coups tournée vers le perçage d'écoulement (3d), sur une surface de déviation (4d) à symétrie de révolution, formée dans une partie radialement extérieure de l'évidement (4b) dans le deuxième organe de fermeture (4), et

   dans lequel la paroi périphérique (4c) est suivie de la surface de déviation (4d) à son extrémité opposée au premier organe de fermeture (3),

   **caractérisé en ce que**

   le premier flux de nettoyage de sièges (R1) est guidé de force par la surface de déviation (4d) radialement vers l'intérieur et axialement par rapport au premier organe de fermeture (3) jusqu'à la fin du deuxième organe de fermeture (4), à une extrémité (4e) du deuxième organe de fermeture (4) frontalement et radialement intérieure située à l'extérieur de l'évidement (4b).

2. Procédé selon la revendication 1,
   **caractérisé en ce que**
   le guidage forcé du premier flux de nettoyage de sièges (R1) est maintenu jusqu'à l'entrée dans le perçage d'écoulement (3d).

3. Procédé selon la revendication 1 ou 2,
   **caractérisé en ce que**
   le deuxième flux de nettoyage de sièges (R2) rencontre une déviation tournée vers le perçage d'écoulement (3d), de par la surface de déviation (4d).

4. Procédé selon la revendication 3,
   **caractérisé en ce que**
   le deuxième flux de nettoyage de sièges (R2) rencontre également un guidage forcé jusqu'à l'entrée dans le perçage d'écoulement (3d), de par la surface de déviation (4d).

5. Procédé selon l'une des revendications précédentes,
   **caractérisé en ce que**
   dans la région de son entrée, le perçage d'écoulement (3d) forme un volume de stockage avec une hauteur de remplissage (h), dont la pression hydrostatique ($\Delta p_{hydr}$) suffit pour transporter le débit volumique de liquide respectif du flux de nettoyage de sièges (R1, R2) au moins à travers une section transversale d'écoulement minimale (a) du perçage d'écoulement (3d) qui se raccorde à la hauteur de remplissage (h) vue dans le sens de gravité.

**6.** Procédé selon l'une des revendications précédentes,
**caractérisé en ce que**
le débit volumique de liquide respectif du flux de nettoyage de sièges (R1, R2) est étranglé et/ou dévié et guidé de telle façon que la pression dans la section de la surface de siège (2b, 2a) située du côté de la cavité de fuite de l'autre organes de fermeture (4, 3) restant respectivement dans sa position de fermeture est égale ou inférieure à la pression ambiante de la soupape à double siège (1).

**7.** Procédé selon l'une des revendications précédentes,
**caractérisé en ce que**
les débits volumiques de liquide générés par les flux de nettoyage de sièges (R1, R2) sont étranglés de manière à ce que les débits volumiques de liquide soient égaux entre eux.

**8.** Procédé selon l'une des revendications précédentes,
**caractérisé en ce que**
les débits volumiques de liquide générés par les flux de nettoyage de sièges (R1, R2) sont étranglés de manière à ce que les débits volumiques s'écoulent sans engorgement dans le perçage d'écoulement (3d) à travers celui-ci vers l'environnement de la soupape à double siège (1).

**9.** Soupape à double siège pour l'exécution du procédé selon l'une des revendications précédentes,

• dans laquelle, sur sa première section d'extrémité (3*), le premier organe de fermeture (3) présente un premier joint d'étanchéité (6) assurant l'étanchéité radialement par rapport à la première surface de siège cylindrique (2a) formée dans l'ouverture de liaison (2c),

• dans laquelle, sur sa deuxième section d'extrémité (4*) tournée vers le premier organe de fermeture (3), le deuxième organe de fermeture (4) possède l'évidement (4b) avec une paroi périphérique (4c) cylindrique alignée avec la première surface de siège cylindrique (2a), et la paroi périphérique (4c) de l'évidement (4b) est dimensionnée de manière à accueillir de façon étanche la première section d'extrémité (3*) et le premier joint d'étanchéité radial (6) du premier organe de fermeture (3) pendant le mouvement d'ouverture, avant l'ouverture du deuxième organe de fermeture (4),

• dans laquelle le deuxième organe de fermeture (4) peut être transféré, par une deuxième levée partielle (T2) dans le sens du mouvement d'ouverture, et le premier organe de fermeture (3) peut être transféré, par une première levée partielle (T1) opposée au mouvement d'ouverture, dans leur position de nettoyage de sièges respective,

• dans laquelle un appendice cylindrique (3**, 4**) formant la fente d'étranglement annulaire (D1, D2) avec l'ouverture de liaison (2c) correspondante est agencé sur chaque section d'extrémité (3*, 4*), du côté de la cavité de fuite,

• dans laquelle la première surface de siège (2a) présente un diamètre inférieur au diamètre d'un évidement annulaire (2d) attribué au deuxième organe de fermeture (4) dans l'ouverture de liaison (2c), et avec une surface de transition (2e) entre la première surface de siège (2a) et l'évidement annulaire (2d),

• dans laquelle le deuxième organe de fermeture (4) s'applique sur la surface de transition (2e) dans sa position de fermeture, avec une surface de butée (4f) agencée sur une surface frontale de son deuxième appendice cylindrique (4**), en prolongeant notamment directement la première surface de siège (2a), et

• dans laquelle, à son extrémité opposée au premier organe de fermeture (3), la paroi périphérique (4c) se poursuit par la surface de déviation (4d), dont le contour (K) présente une évolution sans coude, vu en coupe méridienne,

**caractérisée en ce que**
la surface de déviation (4d) borde entièrement la région restante de l'évidement (4b) qui n'est pas délimitée par la paroi périphérique (4c), et fait saillie de telle façon vers l'extérieur du deuxième organe de fermeture à une extrémité (4e) du deuxième organe de fermeture (4) frontalement et radialement intérieure tournée vers le premier organe de fermeture (3),
que l'extrémité frontalement et radialement intérieure (4e) du deuxième organe de fermeture (4), vue dans la sens de l'axe longitudinal de la soupape à double siège (1), fait saillie au-delà d'un espace théorique délimité du côté frontal par un plan (E) traversant la surface de butée (4f).

**10.** Soupape à double siège selon la revendication 9,
**caractérisée en ce que**
les parties de boîtier de soupape (1 a, 1 b) sont conçues conformément à la plus grande section de passage nominale

(A$_o$) d'un conduit susceptible d'être raccordé à celles-ci, et reliées entre elles par le biais d'une bague de siège (2) formant intérieurement l'ouverture de liaison (2c), **en ce qu'**une partie de liaison (3b) du corps de conduit formant intérieurement une section du perçage d'écoulement (3d) traverse au moins l'ouverture de liaison (2c) lors de la levée d'ouverture complète (H) de la soupape à double siège (1), tout en étant dimensionnée de telle manière du côté radialement extérieur, que l'ouverture de liaison (2c) forme, en son point le plus étroit, un espace annulaire avec une section transversale de passage d'espace annulaire (A$_R$) correspondant au moins à la section transversale de passage nominale (Ao) (A$_R \geq$ A$_o$).

**11.** Soupape à double siège selon la revendication 10,
**caractérisée en ce que**
le perçage d'écoulement (3d) s'affine à partir de l'extrémité du premier organe de fermeture (3) située du côté de la cavité de fuite, de façon conique en un entonnoir d'admission (3f) et en continu jusqu'à la partie de liaison (3b), et présente une section transversale d'écoulement minimale (a) inchangée dans celle-ci, sur une longueur limitée (l).

**12.** Soupape à double siège selon la revendication 10 ou 11,
**caractérisée en ce que**
le perçage d'écoulement (3d) s'élargit à la suite de la partie de liaison (3b), en une section du corps de conduit formée comme un piston d'équilibrage de pression (3c), le piston d'équilibrage de pression (3c) présentant un diamètre extérieur correspondant à la première surface de siège (2a).

**13.** Soupape à double siège selon la revendication 11 ou 12,
**caractérisée en ce que**
l'entonnoir d'admission (3f) forme, avec un volume de liquide s'accumulant dans celui-ci, une hauteur de remplissage (h) dont la pression hydrostatique ($\Delta$p$_{hydr}$) suffit pour transporter le débit volumique de liquide généré dans la position de nettoyage de sièges respective au moins à travers la section transversale d'écoulement minimale (a) du perçage d'écoulement (3d) qui se raccorde à la hauteur de remplissage (h) vue dans le sens de gravité.

**14.** Soupape à double siège selon l'une des revendications 9 à 13,
**caractérisée en ce que**
une deuxième largeur de fente radiale (s2) de la deuxième fente d'étranglement (D2) est conçue inférieure à une première largeur de fente radiale (s1) de la première fente d'étranglement (D1).

**15.** Soupape à double siège selon la revendication 14,
**caractérisée en ce que**
les fentes d'étranglement annulaires (D1, D2) avec leur largeur de fente radiale (s1, s2) et une longueur correspondante (l1, l2) sont conçues de telle façon que les débits volumiques de liquide générés par les flux de nettoyage de sièges (R1, R2) correspondants dans les positions de nettoyage de sièges respectives avec les levées partielles (T1, T2) sont identiques.

**16.** Soupape à double siège selon l'une des revendications 9 à 15,
**caractérisée en ce que**
le contour (K) est constitué d'une suite de sections courbes présentant respectivement une tangente commune en leurs points de transition.

**17.** Soupape à double siège selon l'une des revendications 9 à 16,
**caractérisée en ce que**
une première barre de réglage (3a) reliée au premier organe de fermeture (3) est réduite dans sa section transversale, au moins dans la région d'extension axiale de la partie de liaison (3b), notamment en une région de tige de soupape à section transversale réduite (3h).

**18.** Soupape à double siège selon l'une des revendications 9 à 17,
**caractérisée en ce que**
l'appendice cylindrique (3**, 4**) est conçu sous la forme d'un joint labyrinthe sur sa surface périphérique délimitant la fente d'étranglement (D1, D2) correspondante.

**19.** Soupape à double siège selon la revendication 18,
**caractérisée en ce que**
le joint labyrinthe est conçu sous la forme d'un nombre de rainures périphériques.

**20.** Soupape à double siège selon la revendication 18,
**caractérisée en ce que**
le joint labyrinthe est conçu sous la forme d'un nombre d'évidements répartis sur la surface périphérique de l'appendice cylindrique (3**, 4**) sans être reliés entre eux, avec une superficie limitée à l'endroit respectif de leur formation.

**Figur 1**

**Figur 1a**

**Fig. 2**

**Figur 3**

**Figur 3a**

D2   2b; 2d   4b   T2          4a   4   7   s2   l2

x

$d_{2i}$

T2

$d_{2a}$

3f

3d

$\Delta r$

4**   2e

6

3

3a

# Figur 4

**Figur 4a**

**Figur 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007054134 A1
- US 20090044874 A1
- DE 102007038124 A1
- US 20090065077 A1
- WO 9841786 A1
- US 6178986 B1
- DE 102010046137 A1
- WO 2007054131 A1